# FASCICULE DE BREVET EUROPEEN

(11) **EP 3 275 037 B1**
(45) Date de publication et mention de la délivrance du brevet: **11.05.2022**
(21) Numéro de dépôt: 16715266.9
(22) Date de dépôt: 25.03.2016
(51) Int. Cl.: H01M 10/052, B01D 69/02, B01D 71/02, H01M 10/056, B01D 67/00, B01D 69/14

(54) **MEMBRANE POREUSE À ÉLECTROLYTE, SON PROCÉDÉ DE PRÉPARATION, ET DISPOSITIFS ÉLECTROCHIMIQUES LA COMPRENANT**
PORÖSE ELEKTROLYTMEMBRAN, HERSTELLUNGSVERFAHREN DAFÜR UND ELEKTROCHEMISCHE VORRICHTUNGEN DAMIT
POROUS ELECTROLYTE MEMBRANE, MANUFACTURING PROCESS THEREOF AND ELECTROCHEMICAL DEVICES COMPRISING SAME

(30) Priorité: 26.03.2015 FR 1552572
(43) Date de publication de la demande: 31.01.2018
(73) Titulaire: Commissariat à l'Énergie Atomique et aux Énergies Alternatives, 75015 Paris (FR); Centre National de la Recherche Scientifique, 75016 Paris (FR)
(72) Inventeur: ZANOTTI, Jean-Marc, 92290 Châtenay-Malabry (FR); BERROD, Quentin, 92160 Antony (FR); DIJON, Jean, 38800 Champagnier (FR); FERDEGHINI, Filippo, 94270 Le Kremlin-Bicêtre (FR); JUDEINSTEIN, Patrick, 91190 Gif-sur-Yvette (FR)
(74) Mandataire: Brevalex
(86) Numéro de dépôt international: PCT/EP2016/056732
(87) Numéro de publication internationale: WO 2016/151142

(56) Documents cités:
- WO-A1-2012/013603
- WO-A2-2009/148959
- KR-A- 20140 010 483
- NUNES-PEREIRA J ET AL: "Li-ion battery separator membranes based on poly(vinylidene fluoride-trifluoroethylene)/carbon nanotube composites", SOLID STATE IONICS, vol. 249, 22 août 2013 (2013-08-22), pages 63-71, XP028729210, ISSN: 0167-2738, DOI: 10.1016/J.SSI.2013.07.021

## Description

### DOMAINE TECHNIQUE

L'invention concerne une membrane poreuse à électrolyte, pour des dispositifs électrochimiques.

L'invention concerne en particulier, une membrane à électrolyte liquide ionique ou à électrolyte polymère, pour des dispositifs électrochimiques.

L'invention a trait, en outre, à un procédé de préparation de ladite membrane.

L'invention concerne, également, un dispositif électrochimique comprenant cette membrane à électrolyte, notamment à électrolyte liquide ionique ou à électrolyte polymère solide.

Ce dispositif électrochimique peut être, en particulier, un accumulateur à métal alcalin.

En particulier, l'invention concerne un accumulateur au lithium, notamment un accumulateur au lithium métal ou un accumulateur lithium-ion, comprenant ladite membrane à électrolyte.

Le domaine technique de l'invention peut être défini comme celui des dispositifs électrochimiques, notamment celui des accumulateurs au lithium et plus précisément celui des accumulateurs au lithium-métal et/ou des accumulateurs lithium-ion comprenant un électrolyte. De tels accumulateurs sont notamment utilisés dans les dispositifs électroniques et les véhicules hybrides ou électriques.

### ÉTAT DE LA TECHNIQUE ANTÉRIEURE

Les accumulateurs mis en œuvre dans les véhicules hybrides ou électriques doivent pouvoir à la fois stocker une quantité importante d'énergie et la fournir en une courte durée.

Par rapport à d'autres systèmes électrochimiques de stockage de l'énergie, les batteries au lithium offrent des densités d'énergie très élevées, généralement de l'ordre de 150 Wh/kg, mais des puissances encore modestes (1-3 kW/kg), en raison notamment de facteurs cinétiques et/ou d'une limitation du transport des porteurs de charge au sein de l'électrolyte.

L'électrolyte peut être notamment un transporteur de protons ou conducteur protonique tel que le Nafion^{®}, un liquide ionique protonique ou un acide dissous dans un polymère, un liquide ionique pur, un liquide ionique contenant un sel conducteur ionique tel qu'un sel alcalin, un solvant organique liquide ou un polymère organique contenant un sel conducteur ionique, ou encore une combinaison de plusieurs des électrolytes qui viennent d'être énumérés.

Les électrolytes utilisés dans ces accumulateurs peuvent notamment comprendre des sels dissous dans un milieu liquide ou solide, tel qu'un polymère, qui permet de dissocier ces sels en espèces chargées.

Par exemple les électrolytes des accumulateurs au lithium métal ou lithium-ion peuvent être constitués par des sels de lithium dissous dans une matrice polymère d'où le nom d'« électrolyte polymère » ou de « polymère électrolyte ». On parle alors d'accumulateur « *lithium-polymer* ».

Les polymères usuels de ces électrolytes polymères sont des polymères semi-cristallins dans lesquels coexistent des phases amorphes et cristallines, ou des polymères amorphes ou des polymères réticulés. Ainsi, la matrice polymère des accumulateurs au lithium-métal est-elle généralement constituée par des polymères à base de Poly(Oxyde d'Éthylène) ou POE (« *PEO* » en anglais), répondant à la formule [CH₂-CH₂-O]ₙ où la valeur de n est par exemple d'environ 3000.

Dans ce qui suit on désigne généralement par « solvant », le milieu liquide ou solide, et on désignera généralement par « électrolyte » le milieu constitué par les espèces chargées et le solvant.

En outre, pour garantir et assurer la sûreté du système électrochimique, tel qu'un accumulateur ou une batterie, par exemple pour éviter son inflammation ou la fuite d'espèces chimiques dans l'environnement, il est important d'assurer une bonne tenue mécanique de l'enveloppe du système électrochimique et de l'électrolyte et on utilise donc une matrice poreuse ou une membrane afin de piéger l'électrolyte. On utilise alors les termes de membrane à électrolyte.

La conductivité des électrolytes est le produit de la concentration en porteur de charges par leur mobilité.

La mobilité est proportionnelle au coefficient de diffusion des porteurs de charges et donc inversement proportionnelle à la viscosité du solvant.

En conséquence, il apparaît que la puissance des dispositifs électrochimiques tels que les accumulateurs est contrôlée essentiellement par la viscosité de l'électrolyte et la concentration en porteurs de charges, et on cherche donc constamment à diminuer la viscosité de l'électrolyte et à augmenter la concentration en porteurs de charges.

Pour augmenter la concentration en porteurs de charges, il est nécessaire d'utiliser un solvant dans lequel le sel est soluble et dissocié.

Les solutions usuelles pour diminuer la viscosité de l'électrolyte sont l'augmentation de la température à laquelle fonctionne le système électrochimique, tel qu'un accumulateur, ou l'addition d'additifs plastifiant dans le polymère lorsque l'électrolyte est un électrolyte polymère solide.

Pour des applications dans l'automobile, par exemple, si l'électrolyte est un polymère électrolyte, l'accumulateur doit être maintenu aux environs de 80°C.

Cette contrainte est très défavorable du point de vue du rendement énergétique global, limite le domaine d'utilisation des accumulateurs comprenant de tels électrolytes aux équipements lourds tels que les véhicules automobiles et interdit toute application dans le domaine de l'électronique « grand public » et notamment dans les ordinateurs, les lecteurs MP3 et tous les appareils électroniques légers et portables.

L'incorporation de plastifiants dans le polymère, permet d'accroître la fraction de phase amorphe du polymère et d'augmenter ainsi la conductivité ionique mais elle ne permet d'atteindre qu'une conductivité encore trop faible.

Le document FR-A1-2 963 481 [1] a trait à une membrane minérale à électrolyte dans laquelle :
- la membrane est une membrane poreuse en un oxyde de métal ou de métalloïde isolant électrique comprenant une première surface principale (1) et une deuxième surface principale (2) séparées par une épaisseur (3) ;
- des pores ou canaux traversants (4) ouverts à leurs deux extrémités (5,6), d'un diamètre inférieur ou égal à 100 nm, orientés dans le sens de l'épaisseur (3) de la membrane et tous substantiellement parallèles, sur la totalité de l'épaisseur (3) de la membrane, relient la première surface principale (1) et la deuxième surface principale (2) ; et
- un électrolyte est confiné dans les pores (4) de la membrane.

Dans cette membrane, les pores ou canaux sont créés par attaque chimique dans le substrat, par exemple par anodisation d'une plaque d'aluminium avec de l'acide oxalique puis dissolution de l'oxyde avec un mélange d'acide chromique et d'acide phosphorique.

Cette membrane présente encore une conductivité ionique de l'électrolyte insuffisante, et elle est fragile et cassante car peu ductile. Elle est en outre difficile à mettre en œuvre par des procédés d'extrusion.

Le Document WO-A2-2009/148959 [2] concerne, selon l'abrégé, des membranes nanoporeuses avec des nanotubes de carbone fonctionnalisés qui sont emprisonnés dans un matériau de matrice disposé entre les nanotubes de carbone.

Les différentes utilisations des membranes sont décrites dans la section 4 de la description du document [2].

Il s'agit d'utilisations dans des procédés de séparation ou de purification.

A la page 44 du document [2], des membranes de nanotubes de carbone sont utilisées pour filtrer sous pression des solutions d'électrolytes, à savoir des solutions de ferricyanure de potassium ou de chlorure de potassium.

Dans ce passage du document [2], les solutions d'électrolyte circulent dans les NTC afin que les espèces ioniques soient retenues, ces solutions traversent la membrane, et ne sont pas confinées dans les nanotubes.

La membrane est bien ici une membrane de filtration, qui n'est en aucune manière destinée à une utilisation dans un dispositif électrochimique, notamment dans un accumulateur au lithium comme la membrane à électrolyte selon l'invention.

Il existe donc, au vu de ce qui précède, un besoin pour une membrane à électrolyte, destinée notamment à une utilisation dans un accumulateur au lithium, tel qu'un accumulateur au lithium-métal, ou lithium-ion, qui permette d'améliorer les performances des membranes à électrolytes existantes.

Il existe, en particulier, un besoin pour une membrane à électrolyte, qui présente une conductivité ionique élevée, et améliorée, à la température ambiante, par exemple pouvant atteindre une valeur de 10⁻¹ S/cm, sans addition d'additifs plastifiant à l'électrolyte.

Le but de la présente invention est notamment de fournir une membrane à électrolyte, et qui réponde entre autres à ces besoins.

Le but de la présente invention est encore de fournir une membrane à électrolyte qui ne présente pas les inconvénients, défauts, limitations et désavantages des membranes à électrolytes de l'art antérieur et qui résolve les problèmes des membranes à électrolytes de l'art antérieur.

En particulier, le but de la présente invention est de fournir une membrane à électrolyte qui possède des performances améliorées, notamment en ce qui concerne la conductivité ionique insuffisante à la température ambiante, sans qu'il soit nécessaire d'ajouter des additifs comme des additifs plastifiant, à l'électrolyte.

Le but de la présente invention est par voie de conséquence de fournir une membrane à électrolyte qui lorsqu'elle est mise en œuvre dans un accumulateur procure un gain significatif de la puissance délivrée par ces accumulateurs par rapport aux accumulateurs qui mettent en œuvre les membranes de l'art antérieur.

### EXPOSÉ DE L'INVENTION

Ce but, et d'autres encore, sont atteints, conformément à l'invention telle que définie dans les revendications annexées, par une membrane poreuse à électrolyte comprenant une première surface principale (21) et une deuxième surface principale (22) séparées par une épaisseur (23) dans laquelle :
- des nanotubes de carbone, définissant des pores ou canaux traversant (24) ouverts à leurs deux extrémités (25, 26), d'un diamètre inférieur ou égal à 100 nm, orientés dans le sens de l'épaisseur (23) de la membrane et tous substantiellement parallèles, sur la totalité de l'épaisseur (23) de la membrane, relient la première surface principale (21) et la deuxième surface principale (22) ;
- les nanotubes de carbone sont séparés par un espace, et ledit espace entre les nanotubes de carbone est totalement rempli par au moins un matériau solide ; et
- un électrolyte est confiné à l'intérieur des nanotubes de carbone.

Il est à noter que par « membrane à électrolyte », on désigne généralement la membrane dans laquelle l'électrolyte est confiné à l'intérieur des nanotubes de carbone tandis que par « membrane », on désigne uniquement la membrane en tant que telle sans électrolyte confiné à l'intérieur des nanotubes de carbone.

Par température ambiante, on entend généralement une température de 15°C à 30°C, par exemple de 20°C à 25°C.

Généralement, l'électrolyte ne contient pas d'agent plastifiant, est exempt d'agent plastifiant.

Avantageusement, dans la membrane à électrolyte selon l'invention, l'électrolyte confiné à l'intérieur des nanotubes de carbone remplit la totalité de l'intérieur des nanotubes de carbone, ou plus exactement la totalité, l'intégralité du volume défini par l'intérieur, à l'intérieur des nanotubes de carbone, en d'autres termes la totalité, l'intégralité du volume interne des pores ou canaux.

Au contraire du document [2], notamment page 44, dans la membrane à électrolyte selon l'invention, la composition chimique de l'électrolyte confiné est la même dans tout l'intérieur des nanotubes de carbone, ou plus exactement dans tout le volume défini par l'intérieur, à l'intérieur des nanotubes de carbone, en d'autres termes dans tout le volume interne des pores ou canaux.

Au contraire du document [2], notamment page 44, dans la membrane à électrolyte selon l'invention, la composition chimique de l'électrolyte confiné est la même en tout point de l'intérieur des nanotubes de carbone, ou plus exactement en tout point du volume défini par l'intérieur, à l'intérieur des nanotubes de carbone, en d'autres termes en tout point du volume interne des pores ou canaux.

Autrement dit, au contraire du document [2], notamment page 44, dans la membrane à électrolyte selon l'invention, la composition chimique de l'électrolyte confiné est la même à l'intérieur des nanotubes sur toute la longueur des pores ou canaux, d'une extrémité à l'autre des nanotubes, pores ou canaux, et ne varie pas d'une extrémité à l'autre.

En particulier, au contraire du document [2], notamment page 44, dans la membrane à électrolyte selon l'invention, la conductivité ionique de l'électrolyte confiné est la même dans tout l'intérieur des nanotubes de carbone, ou plus exactement dans tout le volume défini par l'intérieur, à l'intérieur des nanotubes de carbone, en d'autres termes dans tout le volume interne des pores ou canaux.

Au contraire du document [2], notamment page 44, dans la membrane à électrolyte selon l'invention, la conductivité ionique de l'électrolyte confiné est la même en tout point de l'intérieur des nanotubes de carbone, ou plus exactement en tout point du volume défini par l'intérieur, à l'intérieur des nanotubes de carbone, en d'autres termes en tout point du volume interne des pores ou canaux.

Autrement dit, au contraire du document [2], notamment page 44, dans la membrane à électrolyte selon l'invention, la conductivité ionique de l'électrolyte confiné est la même à l'intérieur des nanotubes sur toute la longueur des pores ou canaux, d'une extrémité à l'autre des nanotubes, pores ou canaux et ne varie pas d'une extrémité à l'autre. Cette conductivité est la même tout au long du nanotube, canal ou pore et ne change pas, n'est pas modifiée, au contraire du document [2], notamment page 44,

Dans la membrane à électrolyte selon l'invention, cette conductivité ionique est généralement de 10⁻⁵S.cm à 10⁻¹S.cm, de préférence de 10⁻⁴S.cm à 10⁻¹S.cm, de préférence encore de 10⁻²S.cm à 10⁻¹S.cm.

Dans la membrane à électrolyte selon l'invention, la composition chimique de l'électrolyte confiné est la même que celle de l'électrolyte avant confinement (dit électrolyte « *bulk* »).

La composition chimique de l'électrolyte à l'intérieur des nanotubes est la même que la composition chimique de l'électrolyte à l'extérieur des nanotubes.

Au contraire du document [2], notamment page 44, dans la membrane à électrolyte selon l'invention, il n'y a pas séparation, dissociation, exclusion, rétention d'un des éléments constitutifs de l'électrolyte, d'une partie de l'électrolyte, par exemple lors du remplissage des nanotubes, au contact des nanotubes, et notamment au contact de la paroi interne des nanotubes de carbone.

Dans la membrane à électrolyte selon l'invention, l'électrolyte n'est pas chimiquement modifié de quelque manière que ce soit du fait de son introduction dans les nanotubes.

Comme dans la membrane à électrolyte selon l'invention, il n'y a pas de séparation, dissociation, exclusion, rétention, d'un des éléments constitutifs de l'électrolyte, d'une partie de l'électrolyte, la conductivité ionique ne change pas, notamment ne diminue pas, tout au long du nanotube, canal ou pore d'une extrémité à l'autre, au contraire du document [2], notamment page 44.

Dans le document [2], notamment page 44, il y a rejet des cations et des anions, donc la conductivité est fortement modifiée d'une extrémité à l'autre des nanotubes, car il y a une diminution de la quantité d'ions dans la solution d'une extrémité à l'autre des nanotubes.

En outre, dans la membrane à électrolyte selon l'invention, il n'existe pas, comme dans le document [2] de différence de pression entre la première surface principale et la deuxième surface principale de la membrane. La pression est isostatique. La pression est identique des deux côtés de la membrane. Aucun différentiel de pression n'existe de part et d'autre de la membrane, entre ses deux côtés, ses deux faces, ses deux surfaces principales.

Il existe des dispositifs électrochimiques dans lesquels il y a de l'électrolyte, non seulement à l'intérieur des canaux, tubes, nanotubes de carbone, mais aussi en outre à l'extérieur de la membrane, et des nanotubes, canaux, pores. Cet électrolyte à l'extérieur de la membrane est en contact avec la première surface principale de la membrane et/ou en contact avec la seconde surface principale de la membrane et est généralement en communication fluidique avec l'électrolyte qui se trouve à l'intérieur des canaux, pores, nanotubes. La composition chimique de l'électrolyte qui se trouve à l'intérieur des nanotubes de carbone est, selon l'invention, la même que la composition chimique de l'électrolyte qui se trouve à l'extérieur des nanotubes de carbone (« au-dessus » et/ou « au-dessous » de la membrane), car il n'y a pas, comme on l'a déjà exposé plus haut, de séparation, dissociation, exclusion, rétention, d'un des éléments constitutifs de l'électrolyte, d'une partie de l'électrolyte dans la membrane.

C'est aussi le cas lors du remplissage des canaux, pores, par l'électrolyte lors de la fabrication de la membrane, quand l'électrolyte passe depuis l'extérieur vers l'intérieur de la membrane.

Avantageusement, la première et la deuxième surface principales sont planes et parallèles, la membrane est une membrane planaire, et les nanotubes, les pores ou canaux, sont substantiellement alignés, ou alignés, perpendiculairement à ladite surface.

Comme on l'a déjà indiqué plus haut, les pores sont des pores ouverts, débouchant à leurs deux extrémités.

Ces deux extrémités sont situées respectivement au moins au niveau de la première et de la deuxième surfaces principales. En d'autres termes, ces deux extrémités ne peuvent pas être situées en deçà du niveau de la première ou de la deuxième surface principale, à l'intérieur de la membrane.

Ces deux extrémités peuvent être situées respectivement au niveau de la première et de la deuxième surfaces principales.

Ou bien une de ces deux extrémités ou ces deux extrémités peuvent être situées respectivement au-delà de la première et de la deuxième surfaces principales, c'est-à-dire que les nanotubes dépassent, vont au-delà, de cette première surface principale et/ou de cette deuxième surface principale (c'est le cas sur les figures jointes).

Il n'existe quasiment aucune limitation sur les nanotubes de carbone.

Cependant, les pores ou canaux, en d'autres termes l'âme des nanotubes ne doit pas être obstruée, notamment par des résidus de catalyseur, par exemple du ferrocène, ou par des défauts structuraux de la paroi des nanotubes.

Autrement dit, les canaux ou pores doivent être traversant, entre la première surface principale de la membrane et la seconde surface principale de la membrane et aussi ne pas être obstrués, pour que l'électrolyte circule sans obstacles dans ces canaux ou pores entre la première surface principale de la membrane et la seconde surface principale de la membrane.

Les nanotubes de carbone peuvent être choisis parmi les nanotubes de carbone monoparoi et les nanotubes de carbone multiparoi.

Les nanotubes de carbone sont des conducteurs électroniques ce qui peut limiter leur utilisation dans des applications où ils doivent au contraire être isolants électroniques, par exemple lorsqu'ils doivent être utilisés comme élément séparateur de batterie.

Pour les rendre isolants électroniques, les nanotubes de carbone peuvent être fonctionnalisés, sur leur paroi extérieure (paroi opposée aux pores, canaux) dans le cas de nanotubes de carbone monoparoi, ou sur leur paroi la plus extérieure dans le cas de nanotubes de carbone multiparoi.

Ainsi, les nanotubes de carbone peuvent être fonctionnalisés par exemple par fluoration, ou au moyen d'un composé organique qui les rend isolant électroniques comme un aryl diazonium.

On pourra à cet égard se référer au document FR-A1-2 896 716.

On peut aussi rendre la membrane, isolante électronique en greffant un polymère conducteur ionique (PCI) avec des fonctions pendantes compatibles (ayant une affinité) avec l'électrolyte à au moins l'une des extrémités des NTCs. Par exemple, dans le cas où l'électrolyte comprend un liquide ionique, ces fonctions pendantes peuvent être des fonctions pendantes liquides ioniques. Cela permet d'avoir une bonne affinité du PCI greffé avec l'électrolyte situé « au-dessus » et/ou « au-dessous des pores » à savoir entre l'extrémité des NTCs et la ou les électrodes dans un dispositif électrochimique intégrant la membrane.

Cela permet par exemple d'avoir une bonne affinité du PCI greffé avec un liquide ionique contenu dans l'électrolyte. Il est généralement suffisant de greffer le PCI seulement sur l'une des faces de la membrane, à l'extrémité des nanotubes située sur une même face de la membrane.

Lorsque la membrane à électrolyte, par exemple à électrolyte polymère, selon l'invention est utilisée dans un dispositif électrochimique, tel qu'un accumulateur au lithium, comprenant outre la membrane à électrolyte, une électrode positive, et une électrode négative, le PCI, d'une épaisseur nanométrique, empêchera un contact direct avec une des électrodes tout en garantissant une bonne conduction ionique.

L'épaisseur très faible du PCI aura un impact négligeable sur la conductivité ionique globale.

Par contre, les nanotubes de carbone, puisqu'ils sont conducteurs électroniques peuvent être utilisés comme électrode.

Cependant pour augmenter leurs performances, les nanotubes de carbone peuvent être là-aussi fonctionnalisés, sur leur paroi extérieure, par exemple par des espèces redox, comme des anthraquinones, et/ou des espèces électroactives, comme le ferrocènepyrène.

Avantageusement, les nanotubes de carbone ont un diamètre interne de 1 à 100 nm, de préférence de 1 à 20 nm, de préférence encore de 1 à 3 nm.

Par substantiellement parallèles au sens de l'invention, on entend généralement que les nanotubes de carbone, et les pores ou canaux, présentent une mosaïcité d'orientation qui n'excède pas 10%.

Avantageusement, les nanotubes de carbone et les pores ou canaux ont une longueur, qui correspond généralement à l'épaisseur de la membrane, de 10 microns à 100 mm, de préférence de 50 microns à 500 microns, par exemple de 150 microns.

Avantageusement, les nanotubes de carbone, et les canaux ou pores sont disposés selon un motif régulier, par exemple en rangées ou selon une matrice, par exemple selon une matrice hexagonale compacte.

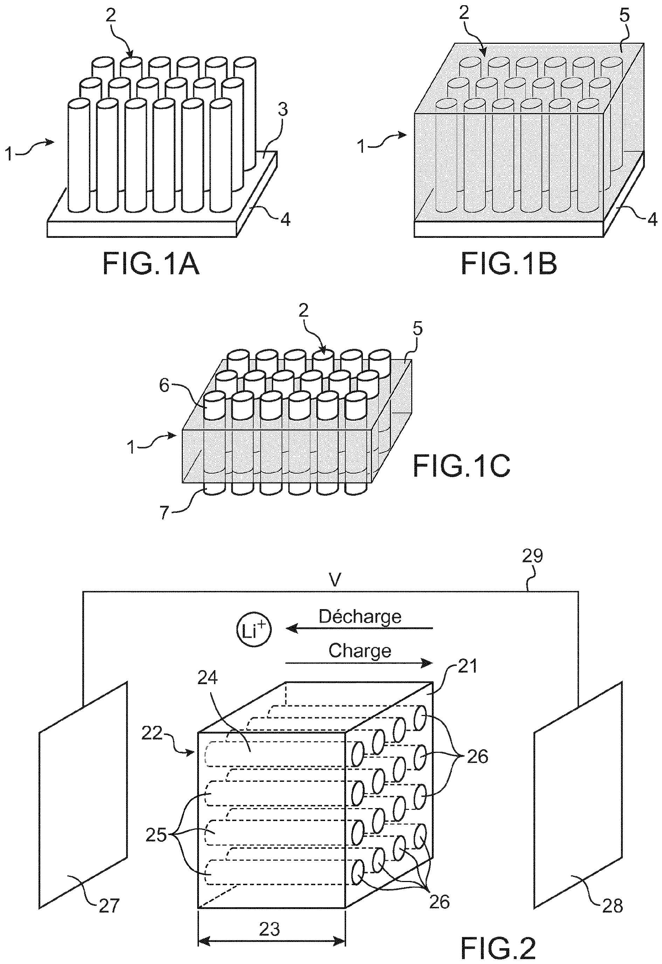

Plus précisément lorsque l'on observe la membrane, ce sont les extrémités, orifices débouchant de ces nanotubes de carbone et canaux ou pores, par exemple au niveau de chacune de la première surface principale et de la deuxième surface principale qui sont disposées selon un motif régulier sur la première surface principale et/ou la deuxième surface principale (voir Figure 1).

Avantageusement, les nanotubes de carbone sont séparés par une distance de l'ordre de grandeur du diamètre externe, dₑₓₜ, des nanotubes de carbone, par exemple par une distance de 1 à 100 nm, de préférence de 1 à 20 nm, de préférence encore de 1 à 3 nm.

Précisons que dₑₓₜ, le diamètre externe d'un nanotube de carbone multiparoi de diamètre interne dᵢₙₜ présentant n parois est dₑₓₜ = dᵢₙₜ + 2 × n × 0,34 nm.

Le matériau solide est choisi notamment en fonction de l'utilisation visée de la membrane à électrolyte.

Ainsi, le matériau solide peut être choisi parmi les matériaux isolants électroniques ou parmi les matériaux conducteurs électroniques dont la surface extérieure, en contact avec l'extérieur de la membrane, a été rendue électroniquement isolante.

Avantageusement, le matériau solide peut être choisi parmi les polymères organiques comme le polystyrène ; les métaux, et les oxydes de métaux.

L'électrolyte peut être par exemple un transporteur de protons ou conducteur protonique tel qu'un liquide ionique protonique ou un polymère conducteur protonique tel que le Nafion^{®}, un liquide ionique zwittérionique, un acide dissous dans un polymère organique, un liquide ionique (pur), un liquide ionique contenant un sel conducteur ionique tel qu'un sel d'un métal alcalin ou un sel d'un métal alcalino-terreux, un solvant organique liquide ou un polymère organique contenant un sel conducteur ionique tel qu'un sel de métal alcalin ou alcalinoterreux, un liquide ionique dans un polymère organique, un mélange d'un polymère organique et d'un solvant organique, un mélange d'un liquide ionique et d'un solvant organique, un mélange d'un liquide ionique, d'un solvant organique et d'un sel d'un métal alcalin ou alcalino-terreux, un mélange d'un polymère organique, d'un solvant organique et d'un sel d'un métal alcalin ou alcalino-terreux, un mélange d'un sel d'un métal alcalin ou alcalino-terreux, par exemple de lithium dans un liquide ionique protique ; ou encore une combinaison de plusieurs des électrolytes qui viennent d'être énumérés.

Avantageusement, l'électrolyte est non aqueux, il est exempt d'eau.

Il est à noter que généralement l'électrolyte contient un sel conducteur ionique, sauf par exemple si l'électrolyte comprend un liquide ionique protique.

Les liquides ioniques, les liquides ioniques protoniques, et les liquides ioniques zwittérioniques désignent trois familles de composés différents.

On peut définir généralement les liquides ioniques comme des sels liquides comprenant un cation et un anion. Les liquides ioniques sont ainsi généralement composés d'un cation organique, leur donnant une charge positive, auquel est associé un anion qui leur donne une charge négative. En outre, les liquides ioniques sont, comme leur nom l'indique, généralement liquides dans l'intervalle de température 0°C à 200°C, en particulier de 0°C à 100°C, notamment autour de la température ambiante, et ils sont ainsi souvent dénommés « *RTIL* » (ou « *Room Temperature Ionic Liquids* » en langue anglaise).

La diversité des liquides ioniques est grande.

Ainsi, le cation C⁺ du liquide ionique peut-il être choisi parmi les cations hydroxonium, oxonium, ammonium, amidinium, phosphonium, uranium, thiouronium, guanidinium, sulfonium, phospholium, phosphorolium, iodonium, carbonium ; et les cations hétérocycliques tels que les cations pyridinium, quinolinium, isoquinolinium, imidazolium, pyrazolium, imidazolinium, triazolium, pyridazinium, pyrimidinium, pyrrolidinium, thiazolium, oxazolium, pyrazinium, piperazinium, pipéridinium, pyrrolium, pyrizinium, indolium, quinoxalinium, thiomorpholinium, morpholinium, et indolinium ; et les formes tautomères de ceux-ci.

L'anion du liquide ionique peut être choisi parmi les halogénures tels que Cl-, parmi des anions plus complexes tels que BF₄⁻, B(CN)₄⁻, CH₃BF₃⁻, CH₂CHBF₃⁻, CF₃BF₃⁻, m-CₙF₂ₙ₊₁BF₃⁻où n est un entier tel que 1 ≤ n ≤ 10, PF₆⁻, CF₃CO₂⁻, CF₃SO₃⁻, N(SO₂CF₃)₂⁻, N(COCF₃)(SOCF₃)⁻, N(CN)₂⁻, C(CN)₃⁻, SCN⁻, SeCN⁻, CuCl₂⁻, AlCl₄⁻, AsF₆⁻, ClO₄⁻, BOB⁻, ODBF⁻, B(C₆H₅)⁻, R_{F}SO₃⁻, N(C₂F₅SO₂)₂⁻, C(R_{F}SO₂)₃⁻ dans lesquels R_{F} est choisi parmi un atome de fluor et un groupement perfluoroalkyle comprenant de 1 à 9, de préférence de 1 à 8 atomes de carbone, notamment un groupement -(CF₂)ₙCF₃ où n est un nombre entier de 1 à 8, TFSI est l'acronyme de bis(trifluorométhylsulfonyl)imide, BOB celui de bis(oxalato)borate, et BETI celui de bis(perfluoroéthylsulfonyl)imide.

Des exemples de liquides ioniques sont donnés dans le document FR-A-2 935 547 à la description duquel on pourra se référer.

Ainsi l'électrolyte peut comprendre, ou être constitué par, un liquide ionique ou un mélange de liquides ioniques.

Des exemples de tels électrolytes sont un électrolyte constitué par du BMIMTFSI (1-butyl-3-methylimidazolium bis(trifluorométhylsulfonyl imide); ou un électrolyte constitué par du 1-octyl-3-methylimidazolium tétrafluoroborate (OMIMBF₄).

L'électrolyte peut comprendre, ou être constitué par, au moins un polymère organique.

Le polymère organique peut être choisi notamment parmi les polymères organiques cristallins ou semi-cristallins avant confinement dans les nanotubes de carbone.

Par polymère organique cristallin ou semi-cristallin (avant confinement), on entend généralement que ledit polymère organique est cristallin ou semi-cristallin pour toute température inférieure à 100°C, et notamment à la température ambiante.

Mais le polymère organique peut être choisi aussi parmi les polymères liquides ou amorphes (avant confinement) ou encore parmi les polymères réticulés. Les polymères liquides ou amorphes à une température inférieure à 100°C, par exemple à température ambiante, sont de préférence choisis parmi les polymères, notamment les oligomères, de POE, et leurs dérivés.

Lorsque l'électrolyte comprend un polymère organique qu'il soit cristallin, semi-cristallin, liquide ou amorphe, l'électrolyte, comprend généralement en outre un sel conducteur ionique, et l'électrolyte est alors généralement appelé électrolyte polymère ou polymère électrolyte.

De préférence, l'électrolyte est alors constitué par un polymère organique qu'il soit cristallin, semi-cristallin, liquide ou amorphe, et en outre, généralement, par un sel conducteur ionique.

L'électrolyte, avant qu'il ne soit confiné, avant confinement, dans les nanotubes de carbone, est aussi appelé électrolyte non-confiné, électrolyte avant confinement, et il est souvent désigné par l'appellation d'électrolyte « en volume » ou électrolyte « *bulk* ».

Ainsi si l'électrolyte comprend ou est constitué par un polymère organique, le polymère, avant qu'il ne soit confiné, aussi appelé polymère non-confiné, est souvent désigné par l'appellation de polymère « en volume » ou polymère « bulk ».

Par polymère au sens de l'invention, on entend aussi bien les homopolymères que les copolymères que les oligomères.

Avantageusement, le polymère organique qu'il soit semi-cristallin ou cristallin, ou liquide ou amorphe, est choisi parmi les polymères qui permettent une bonne solvatation des ions de métaux alcalins, tels que Li, ou des ions de métaux alcalino-terreux.

Avantageusement, le polymère organique notamment semi-cristallin ou cristallin est choisi parmi les homopolymères et copolymères d'oxyde d'éthylène et leurs dérivés.

Les homopolymères et copolymères d'oxyde d'éthylène et leurs dérivés, semi-cristallins ou cristallins présentent généralement une cristallinité d'au moins 10%.

Avantageusement, le polymère organique a une masse molaire inférieure à 10⁶ g/mol, de préférence inférieure à 10⁵ g/mol.

Il est évident que la masse molaire du polymère organique est au moins égale à la masse molaire du ou des monomères utilisés pour la préparer.

Cette masse molaire est par exemple de 10⁵ à 44 g/mol dans le cas du POE.

C'est là un des avantages supplémentaires de la membrane selon l'invention que de permettre l'utilisation dans l'électrolyte de polymères de plus faible masse molaire, et donc moins visqueux, plus fluides que les polymères jusqu'alors utilisés dans les électrolytes. En effet dans la membrane selon l'invention, on obtient un excellent confinement du polymère de l'électrolyte dans les canaux, pores définis par les nanotubes, et cela même pour des polymères de plus faible masse molaire, et donc moins visqueux, plus fluides. Il ne se produit donc pas de dispersion de l'électrolyte dans l'environnement lors d'un incident même si le polymère de l'électrolyte est un polymère de faible masse molaire, « qui coule », car l'électrolyte ne quitte pas les canaux, pores, ne s'en échappe pas.

Dans les membranes de l'art antérieur, le confinement de l'électrolyte dans les pores étant moins bien assuré, il est nécessaire d'utiliser un polymère de masse molaire élevée, visqueux qui ne coule pas, afin qu'il ne s'échappe pas et ne se disperse pas dans l'environnement lors d'un incident.

Avantageusement encore, le polymère organique a une masse molaire inférieure à sa masse d'enchevêtrement critique.

La masse d'enchevêtrement critique est généralement définie comme la masse à partir de laquelle la dynamique du polymère se situe dans un régime de reptation.

Par exemple, la masse d'enchevêtrement critique du POE est de 3600 g/mol.

Avantageusement, le polymère est choisi parmi les poly(oxyde d'éthylène)s de masse moléculaire inférieure à 3600 g/mol, de préférence de 44 (masse du monomère) à 2000 g/mol.

Le sel conducteur ionique peut être un sel d'un métal alcalin ou un sel d'un métal alcalinoterreux.

Le sel d'un métal alcalin peut être par exemple un sel de lithium ou un sel de sodium, et le sel d'un métal alcalinoterreux peut être par exemple un sel de magnésium.

Le sel de lithium peut être choisi par exemple parmi LiAsF₆, LiClO₄, LiBF₄, LiPF₆, LiBOB, LiODBF, LiB(C₆H₅), LiR_{F}SO₃ par exemple LiCF₃SO₃, LiCH₃SO₃, LiN(R_{F}SO₂)₂ par exemple LiN(CF₃SO₂)₂ (LiTFSI) ou LiN(C₂F₅SO₂)₂ (LiBETI), LiC(R_{F}SO₂)₃, par exemple LiC(CF₃SO₂)₃ (LiTFSM), dans lesquels R_{F} est choisi parmi un atome de fluor et un groupement perfluoroalkyle comprenant de 1 à 9 atomes de carbone, de préférence de 1 à 8 atomes de carbone, LiTFSI est l'acronyme de lithium bis(trifluorométhylsulfonyl)imide, LiBOB celui de lithium bis(oxalato)borate, et LiBETI celui de lithium bis(perfluoroéthylsulfonyl)imide.

Le sel de sodium peut être choisi parmi les sels analogues aux sels de lithium déjà énumérés ci-dessus mais comprenant un ion sodium au lieu d'un ion lithium.

Avantageusement, la concentration en sel conducteur ionique tel qu'un sel d'un métal alcalin ou un sel d'un métal alcalino-terreux, lorsqu'il est présent dans l'électrolyte, et en particulier dans l'électrolyte polymère, peut être de 1 à 50% en masse par rapport à la masse de l'électrolyte, par exemple de l'électrolyte polymère.

Avantageusement, l'électrolyte est un électrolyte polymère qui comprend, de préférence est constitué par, un poly(oxyde d'éthylène) (POE), de préférence un poly(oxyde d'éthylène) semi-cristallin (avant confinement) et un sel de lithium, de préférence le LiTFSI.

Avantageusement, le rapport des atomes de lithium aux atomes d'oxygène des groupements éthers du polyéthylène glycol est inférieur ou égal à 1/8, par exemple ce rapport peut être de 1/8, 1/12 ou 1/16.

Ou bien l'électrolyte peut comprendre, de préférence être constitué par, un solvant organique contenant un sel conducteur ionique.

Ou bien l'électrolyte peut comprendre, de préférence être constitué par, un conducteur (transporteur) protonique, par exemple un polymère sulfoné comme le Nafion^{®}.

Avantageusement, l'électrolyte, tel qu'un électrolyte polymère remplit totalement les nanotubes et les pores ou canaux.

Il est à noter que l'électrolyte, tel qu'un électrolyte polymère ne se présente pas sous la forme de particules, notamment de nanoparticules discrètes mais bien sous la forme d'une masse continue et compacte remplissant chacun des nanotubes de carbone, des pores et en contact avec les parois de ceux-ci.

La membrane à électrolyte selon l'invention, par exemple à électrolyte polymère selon l'invention, n'a jamais été décrite dans l'art antérieur tel que représenté notamment par le document [1].

La membrane à électrolyte, par exemple à électrolyte polymère selon l'invention ne présente pas les défauts des membranes à électrolyte, par exemple des membranes à électrolyte polymère de l'art antérieur et apporte une solution aux problèmes posés par les membranes à électrolyte, par exemple à électrolyte polymère, de l'art antérieur.

La membrane poreuse à électrolyte selon l'invention présente au moins trois caractéristiques essentielles, à savoir d'une part la présence de pores de section nanométrique (définis par les nanotubes de carbone), qui confinent un électrolyte, par exemple un électrolyte polymère ou un liquide ionique ; ensuite, le fait que ces pores sont des pores traversants substantiellement orientés dans le même sens, voire orientés dans le même sens, à savoir le sens de l'épaisseur de la membrane et tous substantiellement parallèles, voire parallèles ; et enfin le fait que les pores ou canaux sont spécifiquement des pores définis au moyen de nanotubes de carbone.

Plus précisément, les pores ou canaux sont définis par les nanotubes de carbone, ou plus exactement par la paroi interne, intérieure, des nanotubes de carbone. De ce fait, ces pores ou canaux présentent une surface lisse au contraire des pores ou canaux qui ne sont pas définis par des nanotubes de carbone comme par exemple des canaux ou pores qui sont créés dans un substrat minéral par attaque chimique comme dans le document [1].

Par surface lisse, on entend généralement que la surface ne présente pas d'irrégularités (aspérités, reliefs ; etc.) à l'échelle subnanométrique, que la surface ne cause pas d'interactions chimiques et/ou physico-chimiques telles que des frottements avec le fluide confiné dans les canaux.

L'écoulement de l'électrolyte dans les canaux définis par les nanotubes de carbone de la membrane selon l'invention se produit à une vitesse non nulle à la paroi grâce à l'absence d'interactions entre le fluide et la paroi, et notamment grâce à l'absence de frottements.

Dans le document [1], les canaux de la membrane sont définis dans un oxyde de métal ou de métalloïde, et donc il existe des interactions fortes entre l'électrolyte qui se trouve dans les canaux, et les parois des canaux qui sont irrégulières et rugueuses. Ces interactions sont diminuées voire supprimées dans les canaux de la membrane selon l'invention définis par des nanotubes de carbone.

En outre comme on l'a précisé plus haut, les canaux ne doivent pas être obstrués mais l'absence d'obstruction dans les canaux ne doit pas être confondue avec l'absence d'interactions entre l'électrolyte et la paroi.

La combinaison de ces trois caractéristiques n'a jamais été décrite dans l'art antérieur et différencie clairement la membrane à électrolyte selon l'invention des membranes selon l'art antérieur. En particulier, une membrane à électrolyte comportant des pores définis par des nanotubes de carbone n'a jamais été décrite.

En d'autres termes selon l'invention, on confine un électrolyte dans une membrane présentant à la fois une porosité nanométrique et une orientation macroscopique qui sont créées spécifiquement par des nanotubes de carbone.

La membrane à électrolyte selon l'invention atteint les buts mentionnés plus haut et apporte une solution aux problèmes indiqués ci-dessus.

On peut dire que la membrane à électrolyte selon l'invention exploite l'effet dit de confinement nanométrique unidimensionnel (1D) d'un électrolyte au sein de la membrane, plus exactement dans des pores ou canaux définis par les nanotubes de carbone (FIG. 1) pour accroître la conductivité de l'électrolyte et pour tripler, voire décupler ainsi la puissance de dispositifs électrochimiques de stockage de l'énergie comprenant ladite membrane.

La combinaison des trois caractéristiques énumérées plus haut confère à la membrane à électrolyte selon l'invention, par exemple à électrolyte polymère ou à liquide ionique, des propriétés avantageuses et surprenantes notamment quant à sa conductivité ionique en particulier à température ambiante.

Ainsi, grâce à la membrane à électrolyte selon l'invention, on obtient un gain d'un facteur 3, voire d'un facteur 10 sur les propriétés de transport et donc sur la conductivité ionique.

Par rapport à un électrolyte en volume, « *bulk* », non confiné, nous montrons ici un gain d'un facteur 3 sur le coefficient de diffusion d'un liquide ionique (voir exemples).

Par voie de conséquence, la membrane à électrolyte selon l'invention permet un gain significatif de la puissance délivrée par les accumulateurs la comprenant.

La membrane à électrolyte selon l'invention contribue donc à combler l'écart Puissance/Energie existant dans les performances des systèmes de stockage d'énergie bas carbone.

On peut dire que la membrane à électrolyte, par exemple à électrolyte polymère ou à liquide ionique selon l'invention, du fait des trois caractéristiques essentielles susmentionnées, permet d'améliorer les performances des électrolytes, et en particulier des polymères électrolytes ou à liquide ionique température ambiante grâce à la mise en conjonction, combinaison d'au moins trois effets.

Autrement dit, on peut considérer que l'amélioration des performances de l'électrolyte et notamment le gain en conductivité, trouve son origine à l'échelle moléculaire -c'est-à-dire quelques Angströms- dans la mise en conjonction, combinaison au moins des trois effets suivants :
i) le confinement extrême des molécules d'électrolyte à savoir par exemple de liquide ionique, de polymère et éventuellement de sel ionique, à l'intérieur des canaux ou pores définis par les nanotubes de carbone NTCs, autrement dit dans l'âme des NTCs, induit une frustration de l'organisation spontanée que possède normalement l'électrolyte lorsqu'il est en volume.

Dans le cas des liquides ioniques par exemple, on frustre, contrecarre, contraint l'organisation en clusters transitoires auto-organisés de taille nanométrique.

Ce confinement est dû au diamètre nanométrique des nanotubes qui possèdent généralement un diamètre interne de 1 à 100 nm, de préférence de 1 à 20 nm, de préférence encore de 1 à 3 nm.

On pense que l'augmentation du coefficient de diffusion et/ou de la conductivité ionique est inversement proportionnelle au diamètre des NTCs.

L'augmentation maximale du coefficient de diffusion et/ou de la conductivité ionique est obtenue en utilisant des NTCs dont le diamètre est dans la gamme de 1 à 3 nm.

Le confinement des électrolytes selon l'invention permet d'obtenir des modifications substantielles du comportement thermodynamique par rapport à la situation en volume (« bulk »).

Il est, par exemple, possible d'induire par confinement nanométrique un décalage significatif (plusieurs dizaines de degrés) du point de fusion d'un système cristallin/semi-cristallin.

Un point essentiel est que ces aspects thermodynamiques ne sont que la traduction de modifications structurales sous-jacentes induites par le confinement.

Ce sont ces changements structuraux à l'échelle moléculaire qui induisent à leur tour des propriétés dynamiques spécifiques, comme la super-mobilité de l'électrolyte qui est obtenue selon l'invention.
ii) l'incommensurabilité de la structure des molécules de l'électrolyte avec la surface intérieure « lisse » des NTCs induit un phénomène de glissement sur cette paroi, car le coefficient de friction à l'interface NTC/électrolyte est nul.
iii) l'orientation macroscopique des pores de NTC impose une direction privilégiée, et sans tortuosité, du transport de l'électrolyte d'une électrode à l'autre.

En outre, dans la membrane à électrolyte selon l'invention, il y a un transfert à la membrane de la contrainte de tenue mécanique de l'électrolyte, ce qui permet d'utiliser des électrolytes liquides ou de faible poids moléculaire, par exemple des oligomères, et donc d'améliorer significativement la conductivité de l'électrolyte.

De plus, le nanoconfinement, défini généralement par un diamètre des NTCs et des pores de la membrane qui confinent l'électrolyte inférieur à 100 nm, par exemple de 10-50 nm, permet, notamment dans le cas des électrolytes polymères, de diminuer le point de fusion du polymère par effet Gibbs-Thomson, de façon à ce que la fusion du polymère intervienne de préférence à température ambiante.

Plus généralement, dans le cas des composés de l'électrolyte qui comportent une fraction cristalline, en d'autres termes des composés cristallins ou semi-cristallins, le nanoconfinement a pour effet de diminuer, voire de supprimer totalement la fraction cristalline que ledit composé comporte avant son incorporation dans les pores ou canaux de la membrane, et d'accroître ainsi la conductivité.

On peut dire que le nanoconfinement conduit à une amorphisation partielle ou totale du composé et à un système présentant une mobilité plus grande.

Dans le cas d'un polymère semi-cristallin, tel que le POE, le nanoconfinement va conduire à une amorphisation partielle et avantageusement à une diminution de la température de fusion du polymère.

A l'état liquide, au-delà de son point de fusion, le polymère est généralement 10 à 100000 fois moins visqueux qu'en deçà de son point de fusion.

La conduction unidimensionnelle dans des pores à faible tortuosité fait que les propriétés de transport des électrolytes d'une électrode à l'autre ne sont pas affectées dans la membrane à électrolyte selon l'invention.

Dans le cas où le composé est déjà liquide ou amorphe à une température inférieure à 100°C, et notamment à la température ambiante, c'est cet aspect unidirectionnel 1D qui est prépondérant par rapport à l'aspect de nanoconfinement.

En conclusion, par rapport aux électrolytes, et en particulier aux électrolytes polymères ou liquides ioniques de l'art antérieur, les avantages apportés par la membrane à électrolyte selon l'invention se situent essentiellement au niveau des performances, de la sécurité et de la viabilité économique.

En ce qui concerne les performances, la membrane selon l'invention présente les avantages d'avoir une température de fonctionnement généralement autour de la température ambiante et de présenter une conduction quasi-unidimensionnelle avec une conductivité accrue.

En ce qui concerne la sécurité, la membrane à électrolyte selon l'invention présente les avantages d'assurer un confinement de l'électrolyte et d'éviter une dissémination de l'électrolyte dans l'environnement en cas de rupture de l'accumulateur -ce qui est particulièrement avantageux dans le cas des électrolytes liquides- et de limiter le phénomène de croissance dendritique et donc les risques d'inflammation spontanée de l'accumulateur.

En ce qui concerne la viabilité économique, la membrane à électrolyte selon l'invention présente l'avantage de permettre une diminution de la quantité de sel conducteur entrant éventuellement dans la composition de l'électrolyte, en particulier de sel lithium, utilisée ce qui entraîne en conséquence une diminution du coût de l'électrolyte et de l'accumulateur le contenant. De plus, le phénomène de croissance dendritique et les risques afférents étant limités, la membrane à électrolyte, par exemple à électrolyte polymère selon l'invention, peut voir ses applications étendues à l'électronique portable et/ou « grand public ».

L'invention a trait en outre à un procédé de préparation de la membrane poreuse à électrolyte selon l'invention, telle qu'elle a été décrite dans ce qui précède, dans lequel, on réalise les étapes successives a) et b) suivantes :
a) on fait croître des nanotubes de carbone, tous substantiellement parallèles, et séparés par un espace, sur une surface d'un substrat pourvue d'un catalyseur de croissance des nanotubes de carbone ;
b) ledit espace entre les nanotubes de carbone est totalement rempli par un matériau solide;
ou bien on réalise l'étape a1) suivante :
a1) on fait croître des nanotubes de carbone, tous substantiellement parallèles, et séparés sur une surface d'un substrat et à l'intérieur des pores d'un matériau solide poreux aux pores orientés ;
   puis, à l'issue de l'étape b) ou de l'étape a1), on réalise l'étape c) suivante :
c) on élimine le substrat, tout matériau solide éventuel en excès, et on ouvre les deux extrémités des nanotubes de carbone ;
   puis, à l'issue de l'étape c), on réalise l'étape d) suivante :
d) on remplit l'intérieur des nanotubes avec un électrolyte.

On peut dire que, au cours de l'étape a), on fait croître une forêt de nanotubes de carbone ou un tapis de nanotubes de carbone sur le substrat.

Avantageusement, le substrat de croissance peut être une plaquette de silicium, ou un feuillard d'acier inoxydable ou d'aluminium sur laquelle (lequel) est déposée une couche d'alumine, et le catalyseur de croissance des nanotubes de carbone est déposé sur la couche d'alumine.

Avantageusement, le catalyseur de croissance des nanotubes de carbone peut être choisi parmi le fer, le nickel, le cobalt, et leurs alliages.

Avantageusement, on peut faire croître les nanotubes de carbone par un procédé de dépôt chimique en phase vapeur CVD.

Le matériau solide peut être un polymère organique, et alors l'étape b) est réalisée :
- soit en dissolvant le polymère organique dans un solvant pour former une solution du polymère organique, en remplissant totalement l'espace entre les nanotubes de carbone avec la solution du polymère organique et en évaporant le solvant.
- soit en chauffant le polymère organique en l'absence de solvant au-dessus de sa température de transition vitreuse (Tg) ou de son point de fusion pour le rendre fluide, et en laissant le polymère fluide s'absorber dans l'espace entre les nanotubes de carbone.
- soit en remplissant l'espace entre les nanotubes de carbone par un mélange comprenant des monomères organiques (tels que le styrène, le méthacrylate de méthyle, ou autre), ou des oligomères organiques modifiés par des fonctions réactives, ou des copolymères organiques, et en outre un ou plusieurs amorceur(s) de radicaux libres photosensible et/ou thermo sensible(s) ;
puis en réticulant ledit mélange thermiquement ou au moyen d'un rayonnement photonique.

Ou bien, le matériau solide peut être un métal, et alors l'étape b) est réalisée en déposant ledit métal par un procédé de dépôt électrochimique dans l'espace entre les nanotubes de carbone.

Ou bien, le matériau solide peut être un oxyde de métal et alors l'étape b) est réalisée en déposant ledit oxyde de métal par un procédé de dépôt électrochimique, ou par un procédé sol-gel, dans l'espace entre les nanotubes de carbone.

Quel que soit le matériau solide, l'étape b) peut aussi être réalisée en projetant sous vide ledit matériau solide dans l'espace entre les nanotubes de carbone (pulvérisation sous vide).

Pour combler l'espace interpore des NTCs et réaliser une membrane, un métal intéressant serait sans doute l'aluminium qui est léger et assez ductile.

On pourrait le déposer par électrodéposition puis (dans le cas où la membrane est destinée à être utilisée comme séparateur) réaliser une simple anodisation courte pour transformer les surfaces externe en alumine, qui est quant à elle un matériau isolant. Ainsi, finalement, à l'intérieur de la membrane, il y a alors du métal mais les surfaces extérieures de la membrane au contact des électrodes sont isolantes.

Avantageusement, l'étape c) peut être réalisée par polissage mécanique et/ou par attaque plasma.

L'invention concerne, en outre, un dispositif électrochimique comprenant une membrane à électrolyte selon l'invention, par exemple à électrolyte polymère telle que décrite plus haut.

En particulier, l'invention concerne un accumulateur au lithium comprenant une membrane à électrolyte selon l'invention, telle que décrite plus haut, une électrode positive, et une électrode négative (Figures 2, 3 et 4).

Cet accumulateur au lithium peut être un accumulateur Li-Métal dans lequel l'électrode négative est en Lithium métal ou bien cet accumulateur au lithium peut être un accumulateur Lithium-ion.

Un tel dispositif présente tous les avantages liés de manière inhérente à la mise en œuvre dans de tels dispositifs de la membrane à électrolyte, selon l'invention.

L'invention va maintenant être décrite de manière plus précise dans la description qui suit, donnée à titre illustratif et non limitatif en référence aux dessins joints.

### BRÈVE DESCRIPTION DES DESSINS.

- La Figure 1 est une représentation schématique des étapes a) (Figure 1A), b) (Figure 1B) et c) (Figure 1C) du procédé selon l'invention au cours desquelles un tapis ou forêt de nanotubes de carbone (Figure 1A) est transformé en une membrane de nanotubes de carbone (Figure 1C).
- La Figure 2 est une vue schématique d'un accumulateur, tel qu'un accumulateur au lithium comprenant la membrane à électrolyte selon l'invention.
- La Figure 3 est une vue schématique d'un mode de réalisation particulier d'un accumulateur au lithium comprenant la membrane à électrolyte selon l'invention.
- La Figure 4 est une vue schématique d'un autre mode de réalisation particulier d'un accumulateur au lithium, dit accumulateur au lithium « Full 1D », comprenant la membrane à électrolyte selon l'invention.
- La Figure 5 est une photographie prise au Microscope électronique à balayage du tapis ou forêt de nanotubes de carbone obtenu à l'issue de l'étape 1 de l'exemple 1.

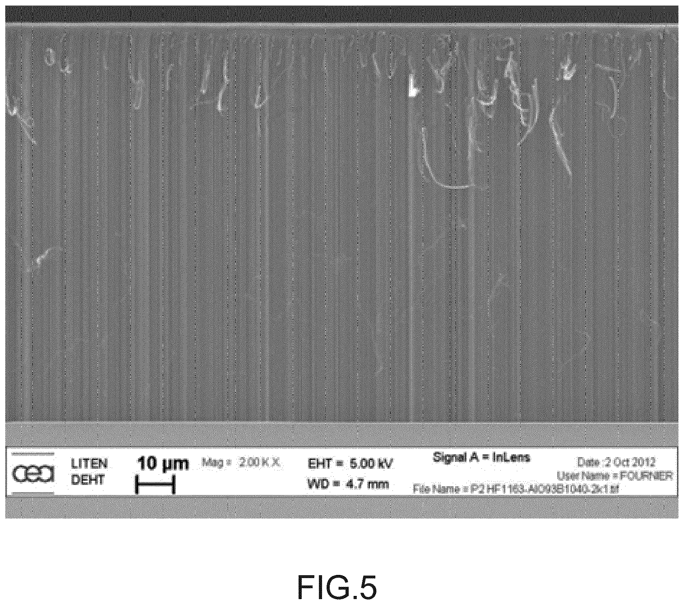

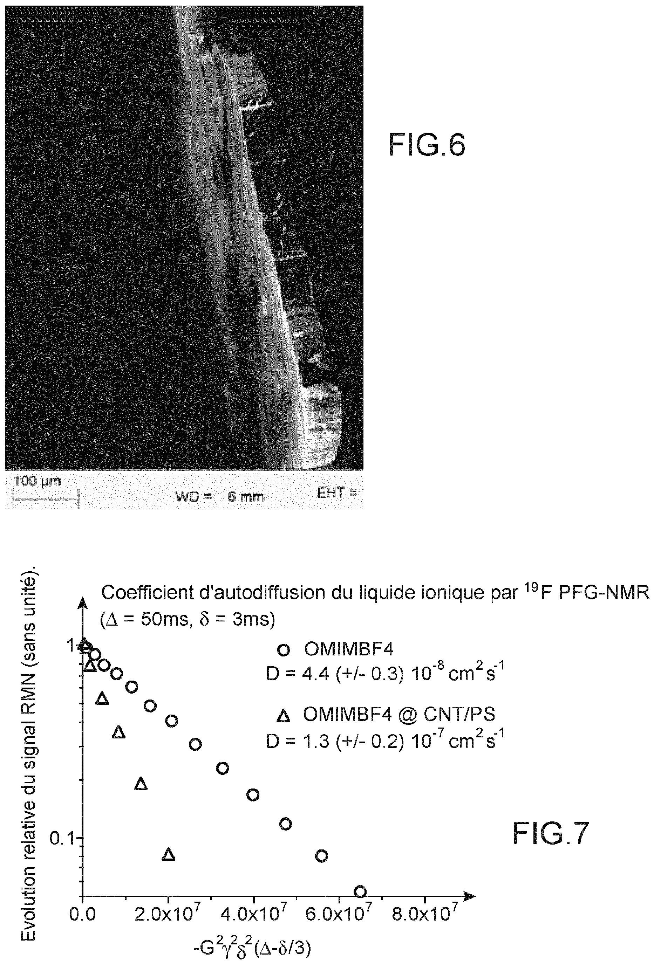

L'échelle portée sur la Figure 5 représente 10 µm. - La Figure 6 est une photographie prise au microscope électronique à balayage de la membrane obtenue à l'issue de l'étape 3 de l'exemple 1.

L'échelle portée sur la Figure 6 représente 100 µm.
- La Figure 7 est un graphique qui donne, à la température ambiante, le coefficient d'autodiffusion, mesuré par RMN ¹⁹F à gradient de champ, du liquide ionique confiné dans les pores de la membrane de NTCs de l'exemple 1, à savoir le 1-octyl-3-methylimidazolium tetrafluro-borate, (OMIMBF₄) (points Δ); et le coefficient d'autodiffusion de ce même liquide ionique, à savoir le 1-octyl-3-methylimidazolium tétrafluoroborate, (OMIMBF₄), mais non confiné dans les pores de la membrane (points o). Ce liquide ionique non-confiné est aussi appelé liquide ionique « volumique » ou « en volume » (« *bulk* »).

En abscisse est portée la fonction de diffusion (-G²γ²δ²(Δ-δ/3)) en s/cm² (seconde/centimètre²), où G est le gradient de champ pulsé, γ le rapport gyromagnétique du noyau étudié -ici le fluor-19- δ la durée de l'impulsion de gradient, et Δ le temps de diffusion (dans cette expérience nous avons utilisé une séquence de type gradient stimulé avec δ = 3 ms, Δ = 50 ms et G variant de 5 G/cm à 700 G/cm).

En ordonnée est portée l'évolution relative du signal RMN (sans unité).

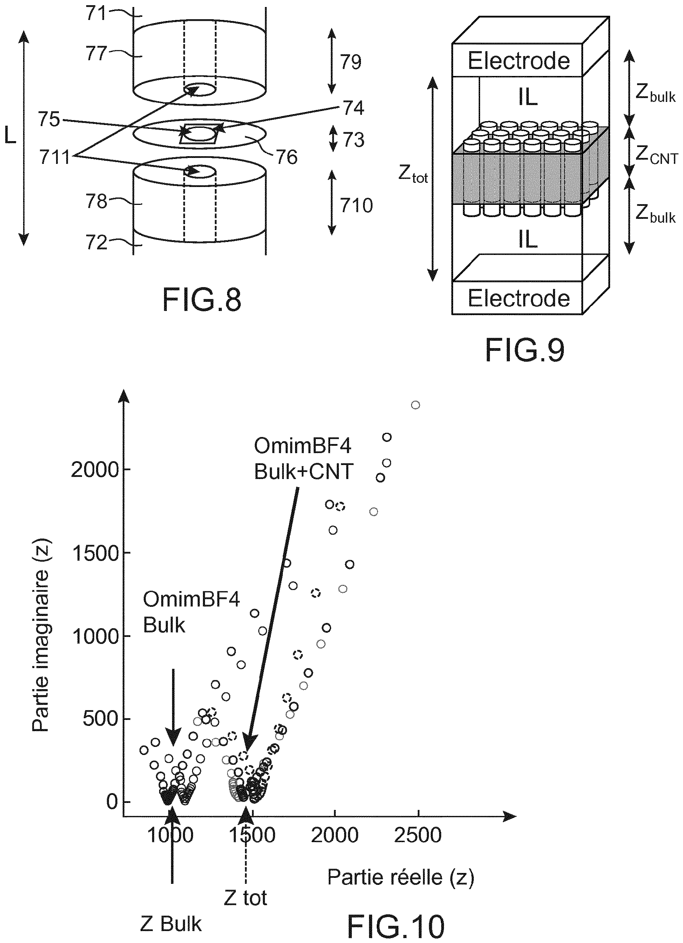

- La Figure 8 est un schéma de principe du dispositif qui a permis de mesurer par spectroscopie d'impédance, à température ambiante, la conductivité du liquide ionique confiné dans les pores de la membrane de NTCs de l'exemple 1, à savoir le 1-octyl-3-methylimidazolium tétrafluoroborate, (OMIMBF₄); et la conductivité de ce même liquide ionique, à savoir le 1-octyl-3-methylimidazolium tétrafluoroborate, (OMIMBF₄), mais non confiné dans les pores de la membrane.
- La Figure 9 est un schéma de principe simplifié du dispositif de la Figure 8.
- La Figure 10 est un graphique qui donne l'impédance électrique du liquide ionique confiné dans les pores de la membrane de NTCs de l'exemple 1, à savoir le 1-octyl-3-methylimidazolium tétrafluoroborate, (OMIMBF₄) (« OmimBF₄ Bulk+CNT »); et l'impédance de ce même liquide ionique, à savoir le 1-octyl-3-methylimidazolium tétrafluoroborate, (OMIMBF₄), mais non confiné dans les pores de la membrane (« OmimBF₄ Bulk »).

En ordonnée est portée la partie imaginaire de l'impédance électrique (en Ohm), et en abscisse est portée la partie réelle de l'impédance électrique (en Ohm).

### EXPOSÉ DÉTAILLÉ DE MODES DE RÉALISATION PARTICULIERS

Cette description se réfère plus particulièrement à un mode de réalisation dans lequel la membrane poreuse à électrolyte selon l'invention est une membrane à électrolyte liquide ionique, notamment la membrane à électrolyte d'un accumulateur au lithium, mais il est bien évident que la description qui suit pourra être facilement étendue, le cas échéant, à toute membrane à électrolyte pouvant être mise en œuvre dans tout dispositif ou système électrochimique, quel que soit l'électrolyte.

En outre, la description qui suit est plutôt faite par commodité en relation avec le procédé de préparation de la membrane selon l'invention mais elle contient aussi des enseignements qui concernent la membrane préparée par ce procédé.

Pour préparer la membrane selon l'invention, on peut commencer par préparer, synthétiser, un tapis de nanotubes de carbone, que l'on peut aussi décrire comme une forêt de nanotubes de carbone, sur une surface (3) d'un substrat solide (4) (Fig. 1A).

A partir de ce tapis, ou forêt, on obtient ensuite une membrane en comblant, remplissant l'espace inter-tubes et en ouvrant les nanotubes de carbone de chaque côté de la membrane (voir Fig. 1B et Fig. 1C).

Le tapis de NTCs (1) peut être synthétisé par un procédé de dépôt chimique en phase vapeur CVD.

Selon un premier mode de réalisation, on peut synthétiser un tapis (1) de nanotubes multiparoi (2) sur une surface (3) d'un substrat solide (4).

Dans ce cas, le substrat de croissance est une plaquette de silicium sur laquelle est déposée par un procédé d'ALD (« *Atomic Layer Deposition* ») une couche d'alumine généralement de 20 nm d'épaisseur.

Selon une variante, cette couche d'alumine peut être déposée sur le substrat par pulvérisation cathodique, ou par un procédé de pulvérisation par faisceau ionique (« *Ion Beam Sputtering* » ou *IBS* en langue anglaise).

Sur ce substrat un catalyseur est déposé, ce catalyseur peut être par exemple du fer, du nickel, du cobalt, ou un alliage de ces métaux.

Ce catalyseur se présente généralement sous la forme d'une couche par exemple d'une épaisseur de 0,2 à 2 nm.

Dans ce mode de réalisation où l'on synthétise un tapis de petits (à savoir avec un diamètre de 3 à 5 nm) nanotubes multi paroi, une couche de fer d'une épaisseur de 1 nm est déposée par évaporation au canon à électrons.

Ce substrat juste avant la croissance des nanotubes peut être éventuellement traité par un plasma.

Toutefois, ce traitement pas un plasma n'est pas obligatoire et peut être omis.

Par exemple, ce substrat peut être traité au moyen d'une succession de deux plasmas d'air généralement à la pression de 0,3 mbar. Ce traitement a pour objectif de supprimer le carbone parasite de l'échantillon et d'oxyder le catalyseur.

Le premier plasma peut être un plasma d'une durée de 20 minutes avec une puissance de 80 W, le deuxième plasma peut être un plasma d'une durée de 20 minutes avec une puissance de 30 W.

Le substrat est ensuite introduit dans une enceinte de dépôt chimique en phase vapeur CVD.

Cette enceinte de dépôt peut, dans ce mode de réalisation où l'on synthétise un tapis de petits (à savoir avec un diamètre de 3 à 5 nm) nanotubes multi paroi, comporter un réseau de 10 filaments montés en parallèle.

Les filaments sont par exemple situés à 1 cm du porte échantillon (sole) et espacés de 1 cm.

Le mélange gazeux, composé par exemple de 20 sccm d'acétylène, 50 sccm d'hydrogène et 110 sccm d'hélium, est introduit à froid à une pression par exemple de 0,9 mbar.

La sole est amenée à la température de 400°C en 10 minutes puis l'on observe un palier à cette température. Les filaments sont chauffés par effet joule avec une puissance par exemple de 800W.

Dans ces conditions après 20 minutes de palier à la température de 400°C, on obtient un tapis de nanotubes dont le diamètre moyen est de 4,5 nm et la hauteur est de 200 µm.

Si le palier est porté à 45 minutes, on obtient des tapis d'une hauteur de 400 µm.

La densité des nanotubes sur le substrat est généralement supérieure à 10¹¹ cm⁻².

Selon un second mode de réalisation, on peut synthétiser un tapis (1) de nanotubes de carbone monoparoi (2) sur une surface (3) d'un substrat solide (4).

Dans ce cas par rapport au premier mode de réalisation de la synthèse du tapis de nanotubes:
- l'épaisseur de la couche de catalyseur tel que le fer est réduite à 0,25nm,
- la température de la sole chauffante est portée à 500°C,
- le nombre de filament est réduit à 6,
- le mélange gazeux est composé de 5 sccm d'acétylène, 200 sccm d'hydrogène, et 200 sccm d'hélium.

Les autres conditions de la synthèse du tapis de nanotubes sont identiques à celles du premier mode de réalisation de cette synthèse.

Lors de cette étape de synthèse du tapis de nanotubes de carbone NTCs, l'homme du métier pourra facilement adapter les conditions du procédé de façon à obtenir des nanotubes de carbone monoparoi ou multiparoi présentant le diamètre, la densité de greffage des NTCs, et la longueur des NTCs voulues, dans de larges plages.

Ainsi :
- Diamètre des pores : On peut obtenir des NTCs dont le diamètre se trouve dans la gamme de 1 à 100 nm. On pense que l'augmentation du coefficient de diffusion et/ou de la conductivité ionique est inversement proportionnelle au diamètre des NTCs. On cherche donc de préférence à obtenir des NTCs dont le diamètre est dans la gamme 1 à 3 nm.
- Densité de greffage des NTCs : On peut obtenir une densité de greffage de 10⁹ à 10¹³ cm⁻².
- On cherchera généralement à optimiser la densité de greffage des NTCs, de façon à ce qu'elle soit la plus élevée possible, par exemple dans la plage de 10¹¹ cm⁻² à 10¹³ cm⁻².
- Longueur des NTCs : On peut obtenir des NTCs d'une longueur dans la gamme de 10 microns à 100 mm, de préférence de 50 microns à 500 microns, par exemple de 150 microns.

Après avoir synthétisé le tapis (1) de nanotubes de carbone (2), sur une surface (3) d'un substrat solide (4), on transforme ce tapis en membrane en remplissant/comblant l'espace entre les nanotubes de carbone, NTCs, par un matériau solide tel qu'un polymère organique appelé aussi matériau de matrice (5) (Fig. 1B).

Dans le cas où le matériau solide est un polymère organique, ou peut dissoudre ce polymère dans un solvant adéquat pour obtenir une solution du polymère organique dans le solvant.

Le polymère tel que du polystyrène 350000 g/mol peut être par exemple dissous dans du toluène pour obtenir une solution à 20 % en masse.

La solution du polymère organique est versée sur le tapis de NTCs, moyennant quoi elle remplit l'espace entre les nanotubes de carbone, puis on laisse le solvant s'évaporer.

Ou bien on peut utiliser un polymère organique sans solvant et le chauffer, de préférence sous vide, au-dessus de sa température de transition vitreuse Tg, ou de son point de fusion, pour obtenir ainsi un polymère fluide ou fondu. On peut laisser ce polymère fluide ou fondu s'absorber dans l'espace intertube par simple capillarité.

Si le matériau solide est un métal ou un oxyde de métal alors on peut déposer ledit métal ou ledit oxyde de métal par un des procédés déjà mentionnés plus haut, tels qu'un procédé de dépôt électrochimique ou un procédé sol-gel, dans l'espace entre les nanotubes de carbone.

Quel que soit le matériau solide, on peut remplir l'espace entre les nanotubes de carbone en projetant ledit matériau solide dans l'espace entre les nanotubes de carbone.

Selon un autre mode de réalisation, au lieu de faire croître des nanotubes de carbone, tous substantiellement parallèles, et séparés par un espace, sur une surface d'un substrat pourvue d'un catalyseur de croissance des nanotubes de carbone, puis de remplir totalement ledit espace entre les nanotubes de carbone par un matériau solide, on peut en une seule étape faire croître des nanotubes de carbone, tous substantiellement parallèles et séparés, sur une surface d'un substrat et à l'intérieur des pores d'un matériau solide poreux aux pores orientés.

Un tel matériau solide poreux aux pores orientés peut être choisi par exemple parmi les alumines poreuses, et la croissance peut être réalisée par un procédé de dépôt chimique en phase vapeur CVD.

Ensuite, on élimine le substrat, tout matériau solide en excès éventuel, et on ouvre les deux extrémités (6,7) des nanotubes de carbone (2) (Fig. 1C).

Le matériau solide en excès éventuel est essentiellement le matériau solide en excès qui recouvre l'extrémité (6) des nanotubes de carbone du côté opposé au substrat.

L'élimination le substrat, du matériau solide éventuel en excès, et l'ouverture des deux extrémités des nanotubes de carbone peut être réalisée par toute technique adéquate par exemple par polissage mécanique et/ou par attaque plasma.

Ensuite, dans une étape finale (non représentée sur la Figure 1), on remplit l'intérieur des nanotubes avec un électrolyte.

L'électrolyte a déjà été décrit plus haut.

Comme on l'a déjà indiqué plus haut, dans le cas où l'électrolyte est un polymère qui contient un sel conducteur, on parle alors de polymère électrolyte ou électrolyte polymère.

On peut utiliser tout type de polymère électrolyte par exemple une solution de sel alcalin dans du poly(oxyéthylène) (POE). La masse du poly(oxyéthylène)(POE) peut être dans la gamme entre 44 et 10⁶ g/mol.

Des sels ioniques et des liquides ioniques ont déjà été énumérés plus haut.

Le remplissage peut s'effectuer par simple imbibition, spontanée ou sous vide, de l'âme, l'intérieur des NTCs au contact de l'électrolyte, par exemple du liquide ionique.

Dans le cas d'un électrolyte polymère, celui-ci peut être confiné dans les pores en immergeant la dans un excès d'électrolyte polymère fondu ou liquide, de préférence sous vide et à chaud au-delà du point de fusion de l'électrolyte.

On peut dire que l'électrolyte polymère liquide pénètre la structure poreuse par simple capillarité.

La membrane à électrolyte, par exemple à liquide ionique ou à polymère, selon l'invention telle qu'elle a été décrite plus haut peut être utilisée dans tout système, électrochimique mettant en œuvre un électrolyte polymère (Figure 2).

La membrane à électrolyte comprend une première surface principale (21) et une deuxième surface principale (22) séparées par une épaisseur (23).

Des nanotubes de carbone définissent des pores ou canaux traversants (24) ouverts à leurs deux extrémités (25,26), d'un diamètre inférieur ou égal à 100 nm, orientés dans le sens de l'épaisseur (23) de la membrane et tous substantiellement parallèles, sur la totalité de l'épaisseur (23) de la membrane. Ces pores ou canaux relient la première surface principale (21) et la deuxième surface principale (22) ; et un électrolyte est confiné dans les pores (24) de la membrane.

Le système électrochimique peut être notamment un accumulateur électrochimique rechargeable tel qu'un accumulateur ou une batterie au lithium, qui outre la membrane à électrolyte, telle que définie plus haut comprend une électrode positive ; une électrode négative ; généralement des collecteurs de courant (27,28), généralement en cuivre pour l'électrode négative, ou en aluminium pour l'électrode positive, qui permettent la circulation des électrons, et donc la conduction électronique, dans le circuit extérieur (29) ; et généralement un séparateur permettant d'empêcher le contact entre les électrodes et donc les courts-circuits, ces séparateurs peuvent être des membranes polymères microporeuses.

L'électrode négative peut être constituée par du lithium métal en tant que matière électrochimiquement active, dans le cas des accumulateurs lithium-métal, sinon l'électrode négative peut comprendre en tant que matière électrochimiquement active, des matériaux d'intercalation tels que le carbone graphite (C_{gr}), ou de l'oxyde de titane lithié (Li₄Ti₅O₁₂) dans le cas des accumulateurs basés sur la technologie lithium-ion.

L'électrode positive comprend généralement, en tant que matière électrochimiquement active, des matériaux d'intercalation du lithium tels que des oxydes lamellaires de métaux de transition lithiés, des olivines ou phosphates de fer lithiés (LiFePO₄) ou des spinelles (par exemple, le spinelle LiNi_{0,5}Mn_{1,5}O₄).

Plus précisément, les électrodes, dans le cas où elles ne sont pas constituées par du lithium métallique, comprennent un liant qui est généralement un polymère organique, une matière électrochimiquement active d'électrode positive ou négative, éventuellement un ou des additif(s) conducteur(s) électronique(s), et un collecteur de courant.

Dans l'électrode positive, la matière électrochimiquement active peut être choisie parmi les composés déjà cités plus haut dans la présente description ; et parmi LiCoO₂ ; les composés dérivés de LiCoO₂ obtenus par substitution de préférence par Al, Ti, Mg, Ni et Mn, par exemple LiAlₓNi_{y}Co_{(1-x-y)}O₂ ou x<0,5 et y<1, LiNiₓMnₓCo₁₋₂ₓO₂; LiMn₂O₄; LiNiO₂; les composés dérivés de LiMn₂O₄ obtenus par substitution de préférence par Al, Ni et Co ; LiMnO₂; les composés dérivés de LiMnO₂ obtenus par substitution de préférence par Al, Ni, Co, Fe, Cr et Cu, par exemple LiNi_{0,5}O₂; les olivines LiFePO₄, Li₂FeSiO₄, LiMnPO₄, LiCoPO₄ ; les phosphates et les sulfates de fer hydratés ou non ; LiFe₂(PO₄)₃ ; les phosphates et les sulfates de vanadyle hydratés ou non, par exemple VOSO₄,nH₂O et LiₓVOPO₄,nH₂O (0<x<3, 0<n<2) ; Li₍₁₊ₓ₎V₃O₈, 0<x<4,LiₓV₂O₅, nH₂O, avec 0<x<3 et 0<n<2 ; et leurs mélanges.

Dans l'électrode négative, la matière électrochimiquement active peut être choisie parmi les composés déjà cités plus haut dans la présente description ; et parmi les composés carbonés tels que les graphites naturels ou synthétiques et les carbones désordonnés ; les alliages de lithium de type LiₓM avec M=Sn, Sb, Si; les composés LiₓCu₆Sn₅ avec 0<x<13; les borates de fer; les oxydes simples à décomposition réversible, par exemple CoO, Co₂O₃, Fe₂O₃ ; les pnicures, par exemple Li_{(3-x-y)}Co_{y}N, Li_{(3-x-y)}Fe_{y}N, LiₓMnP₄, LiₓFeP₂ ; LiₓFeSb₂ ; et les oxydes à insertion tels que les titanates, par exemple TiO₂, Li₄Ti₅O₁₂, LiₓNiP₂, LiₓNiP₃, MoO₃ et WO₃ et leurs mélanges, ou tout matériau connu de l'homme du métier dans ce domaine de la technique.

L'additif conducteur électronique éventuel peut être choisi parmi les particules métalliques telles que les particules d'Ag, le graphite, le noir de carbone, les fibres de carbone, les nanofils de carbone, les nanotubes de carbone et les polymères conducteurs électroniques, et leurs mélanges.

Les collecteurs de courant sont généralement en cuivre pour l'électrode négative, ou en aluminium pour l'électrode positive.

Entre l'électrode positive, plus exactement le collecteur de courant de l'électrode positive (28) et la première surface principale (21) de la membrane à électrolyte se trouve généralement le même électrolyte que celui confiné dans les pores de la membrane, à l'intérieur des nanotubes. Cependant, cet électrolyte qui se trouve entre l'électrode positive, plus exactement le collecteur de courant de l'électrode positive (28) et la première surface principale (21) de la membrane à électrolyte est un électrolyte « *bulk* » non confiné à la différence de l'électrolyte qui est à l'intérieur des nanotubes (voir aussi la Fig. 8).

Cet électrolyte « *bulk* », non confiné est généralement en contact avec l'électrode positive, plus exactement le collecteur de courant de l'électrode positive (28) et la première surface principale (21) de la membrane à électrolyte, et est généralement en communication fluidique avec l'électrolyte confiné à l'intérieur des pores (voir aussi la Fig. 8).

De la même manière, entre l'électrode négative, plus exactement le collecteur de courant de l'électrode négative (27) et la deuxième surface principale (22) de la membrane à électrolyte se trouve généralement le même électrolyte que celui confiné dans les pores de la membrane, à l'intérieur des nanotubes. Cependant cet électrolyte qui se trouve entre l'électrode négative, plus exactement le collecteur de courant de l'électrode négative (27) et la deuxième surface principale (22) de la membrane à électrolyte est un électrolyte « *bulk* » non confiné à la différence de l'électrolyte qui est à l'intérieur des nanotubes (voir aussi la Fig. 8).

Cet électrolyte « *bulk* », non confiné est généralement en contact avec l'électrode négative plus exactement le collecteur de courant de l'électrode négative (27) et la deuxième surface principale (22) de la membrane à électrolyte, et est généralement en communication fluidique avec l'électrolyte confiné à l'intérieur des pores (voir aussi la Fig. 8).

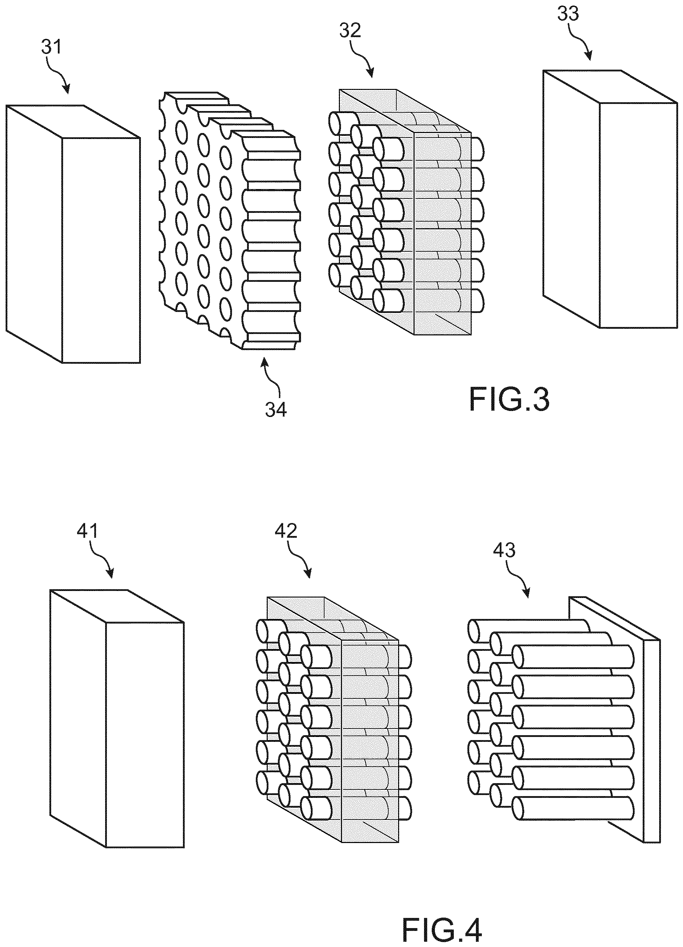

La Figure 3 montre un mode de réalisation particulier d'un accumulateur tel qu'un accumulateur au lithium selon l'invention.

Cet accumulateur comprend une électrode négative (31) par exemple une électrode négative au lithium métal, une membrane à électrolyte selon l'invention (32), et une électrode positive (33).

La membrane à électrolyte (32) comprend un électrolyte, par exemple un liquide ionique contenant un sel de lithium, confiné dans des pores définis par des nanotubes de carbone, par exemple d'un diamètre de 2 à 8 nm.

La membrane à électrolyte selon l'invention (32), comprenant des NTCs qui sont conducteurs électroniques, le fonctionnement du dispositif nécessite éventuellement d'intercaler un milieu à la fois poreux et bon isolant électrique (34) entre la membrane comprenant des NTCs (32) et l'une des deux électrodes.

Ce milieux poreux isolant peut-être par exemple une membrane poreuse ou un assemblage de type sol-gel. Il est souhaitable, mais pas nécessaire que les pores de ce milieux poreux isolant soient macroscopiquement orientés. Le diamètre des pores de ce milieu poreux isolant doit être supérieur aux diamètres des NTCs.

Comme membrane poreuse (34), une membrane d'alumine poreuse, telle qu'une membrane en « *Anodic Aluminum Oxide* » ou « *AAO* » en langue anglaise, peut être utilisée. Il s'agit de membranes céramiques (très bon isolant électrique) de quelques centimètres de côté, par exemple de 0,1 à 100 et de quelques centaines de microns d'épaisseur, par exemple de 1 à 500.

Sur la Figure 3, une telle membrane d'alumine poreuse (34) est intercalée entre l'électrode négative (31) et la membrane à électrolyte (32) selon l'invention.

La Figure 4 montre un autre mode de réalisation particulier d'un accumulateur tel qu'un accumulateur au lithium selon l'invention que l'on peut appeler accumulateur au lithium « *Full 1D* ».

Cet accumulateur comprend une électrode négative (41) par exemple une électrode négative au lithium métal, une membrane à électrolyte selon l'invention (42), et une électrode positive (43).

La membrane à électrolyte selon l'invention (42) comprend un électrolyte, par exemple un liquide ionique contenant un sel de lithium, confiné dans des pores définis par des nanotubes de carbone NTCs, par exemple d'un diamètre de 2 à 8 nm.

Mais dans ce mode de réalisation, lors de la préparation de la membrane à électrolyte et avant la conversion des tapis de NTCs en membrane, l'hybridation des atomes de carbone des NTCs a été modifiée par greffage d'un polymère.

De ce fait, les NTCs deviennent alors isolant électroniques et le milieu poreux à intercaler entre la membrane à électrolyte selon l'invention, et l'une des électrodes devient superflue (voir Fig. 4).

L'électrode positive (43) de l'accumulateur selon ce mode de réalisation peut être toute électrode positive connue, cependant sur la Figure 4, l'électrode positive représentée (43) est une électrode obtenue par fonctionnalisation des tapis de NTC par des espèces électro-actives, espèces redox comme par exemple l'Anthraquinone AAQ.

Les accumulateurs qui comprennent la membrane à électrolyte, par exemple à électrolyte polymère, selon l'invention peuvent être utilisés notamment pour la propulsion automobile comme les batteries dans des véhicules électriques ou hybrides, comme les batteries pour l'alimentation d'appareils électroniques portatifs tels que des ordinateurs, téléphones, montres, et consoles de jeux portables; plus généralement comme les batteries pour l'alimentation d'appareils électronique tels que des ordinateurs, des lecteurs vidéo, des lecteurs MP3, MP4 etc. ; comme les batteries pour l'alimentation d'appareils électroniques embarqués par exemple sur des aéronefs ; comme les batteries pour le stockage de l'énergie produite par des dispositifs générateur d'électricité intermittents, comme les éoliennes et les panneaux solaires.

L'invention va maintenant être décrite en référence aux exemples suivants, donnés à titre illustratif et non limitatif.

### EXEMPLES.

### Exemple 1.

Dans cet exemple, on prépare une membrane à électrolyte selon l'invention.

Le procédé de préparation de cette membrane à électrolyte selon l'invention comprend quatre étapes successives.

### Etape 1.

Au cours de cette étape (Figure 1A) on prépare, synthétise un tapis, ou forêt de nanotubes de carbone multiparoi sur un substrat, par un procédé de dépôt chimique en phase vapeur (« *CVD* » ou « *Chemical Vapour Déposition* » en anglais).

Le substrat de croissance est une plaquette (« wafer ») de silicium sur lequel est déposée par un procédé d'ALD (« *Atomic Layer Deposition* ») une couche d'alumine de 20 nm d'épaisseur.

Sur cette couche d'alumine, une couche de fer d'une épaisseur de 1 nm jouant le rôle de catalyseur est déposée par évaporation au canon à électrons.

Juste avant de procéder à la croissance des nanotubes, le substrat pourvu de la couche de fer subit deux traitements successifs par des plasmas d'air à la pression de 0,3 mbar.

Le premier traitement est un traitement d'une durée de 20 minutes avec une puissance de 80W, et le second est un traitement d'une durée de 20 minutes à une puissance de 30W.

Le substrat est ensuite introduit dans une enceinte de dépôt chimique en phase vapeur CVD comportant un réseau de 10 filaments montés en parallèle.

Les filaments sont situés à 1 cm du porte-échantillon, constitué par une sole, et ils sont espacés entre eux de 1 cm.

Les filaments sont chauffés par effet joule avec une puissance de 800W.

Un mélange gazeux composé de 20 sccm d'acétylène, 50 sccm d'hydrogène et 110 sccm d'hélium est introduit à froid dans l'enceinte de CVD à une pression de 0,9 mbar.

La sole est portée à une température de 400°C en 10 minutes, puis on observe un palier à la température de 400°C pendant une durée de 20 minutes ou de 45 minutes.

Après avoir observé un palier à 400°C pendant une durée de 20 minutes, on obtient un tapis de nanotubes de carbone dont le diamètre moyen est de 4,5 nm et la hauteur, longueur est de 200 µm.

Si le palier est porté à 45 minutes, on obtient des tapis de nanotubes de carbone également d'un diamètre moyen de 4,5 nm, mais dont la hauteur, longueur est de 400 µm.

La densité des nanotubes sur la surface du substrat est supérieure à 10¹¹ cm⁻².

La Figure 5 est une photographie prise au Microscope électronique à balayage du tapis ou forêt de nanotubes de carbone obtenu à l'issue de l'étape 1.

### Etape 2.

Au cours de cette étape, on transforme le tapis de nanotubes de carbone en membrane par remplissage, comblement de l'espace vide entre les nanotubes de carbone NTCs du tapis de nanotubes de carbone, de la forêt de nanotubes de carbone par un polymère (Fig. 1B).

Le polymère est du polystyrène dont la masse moléculaire est de 350000 g/mol.

Ce polymère est dissous dans du toluène pour obtenir une solution à 20% en masse.

Cette solution est versée sur le tapis, la forêt, de nanotubes de carbone, puis on laisse le solvant s'évaporer.

A l'issue de cette étape on obtient une membrane dans laquelle les nanotubes de carbone sont entourés d'une matrice de polymère.

Généralement l'extrémité des nanotubes de carbone opposée au substrat est recouverte de polymère (Fig. 1B) et du polymère en excès est donc présent sur les nanotubes.

### Etape 3.

Au cours de cette étape, on effectue un polissage mécanique des deux faces de la membrane obtenue dans l'étape 2 afin d'éliminer le polymère en excès, d'éliminer le substrat et d'ouvrir les nanotubes de carbone à leurs deux extrémités (FIG. 1C).

La Figure 6 est une photographie prise au microscope électronique à balayage de la membrane obtenue à l'issue de l'étape 3.

### Etape 4.

Au cours de cette étape on remplit l'intérieur, l'âme, des nanotubes de carbone par un électrolyte.

Cet électrolyte peut être constitué par le liquide ionique 1-octyl-3-methylimidazolium tétrafluoroborate (OMIMBF₄), ou bien par le liquide ionique BMIMTFSI 1-butyl-3-methylimidazolium bis(trifluorométhylsulfonyl imide) ou bien par du POE-LiTFSI (M_{PEO} = 500 g/mol, 29% en masse de LiTFSI).

Le remplissage s'effectue par simple imbibition spontanée ou sous vide de l'âme des NTCs au contact de l'électrolyte, par exemple du liquide ionique.

Dans les exemples 2 et 3 qui suivent, on a mesuré les propriétés de la membrane à électrolyte selon l'invention préparée dans l'exemple 1.

Dans l'exemple 2, le coefficient de diffusion ou plus exactement le coefficient d'autodiffusion (« *self-diffusion coefficient* ») du liquide ionique OMIMBF₄ confiné dans la membrane de nanotubes de carbone préparée dans l'exemple 1 a été mesuré à la température ambiante.

La mesure a été faite par Résonance Magnétique Nucléaire (RMN) à gradient de champ pulsé (« *Pulsed Field Gradient Nuclear Magnetic Resonance* » ou « *PFG-NMR* » en anglais) du Fluor 19 (Fig. 7).

Dans l'exemple 2, on a également effectué des mesures complémentaires par PFG-NMR de l'hydrogène, du Fluor 19 ou du Lithium 7, des coefficients d'autodiffusion (Ds) des différents électrolytes, cités plus haut, confinés dans la membrane de nanotubes de carbone NTCs préparée dans l'exemple 1.

Dans l'exemple 3, la conductivité du liquide ionique (OMIMBF₄) confiné dans la membrane de nanotubes de carbone a été mesurée à la température ambiante.

La mesure a été faite par spectroscopie d'impédance (Fig. 8 et 9).

### Exemple 2.

Dans cet exemple, on mesure tout d'abord le coefficient de diffusion du liquide ionique OMIMBF₄ confiné dans la membrane de nanotubes de carbone NTCs préparée dans l'exemple 1 à la température ambiante.

La mesure est faite par Résonance Magnétique Nucléaire (RMN) à gradient de champ pulsé (« *Pulsed Field Gradient Nuclear Magnetic Resonance* » ou « *PFG-NMR* » en anglais) du Fluor 19 (Fig. 7).

A des fins de comparaison, on mesure également, à la température ambiante, le coefficient de diffusion du même liquide ionique que celui confiné dans les pores de la membrane de NTCs de l'exemple 1, à savoir le 1-octyl-3-methylimidazolium tétrafluoroborate, (OMIMBF₄), mais non confiné dans les pores. Ce liquide ionique non-confiné est aussi appelé liquide ionique « volumique » ou « en volume » (« *bulk* »).

Les résultats de ces mesures sont portés sur la Figure 7.

Cette figure montre que, à température ambiante, le coefficient d'autodiffusion du liquide ionique (1-octyl-3-methylimidazolium tétrafluoroborate, OMIMBF₄) confiné selon l'invention dans une membrane de nanotubes de carbone dont le diamètre interne moyen des pores est de 4 nm, est environ 3 fois supérieur au coefficient d'autodiffusion du même liquide ionique non-confiné, volumique.

En d'autres termes, on obtient une augmentation d'un facteur trois environ du coefficient d'autodiffusion du fait du confinement, car ce coefficient d'autodiffusion est de 4,4 (+/- 0,3) 10⁻⁸ cm²s⁻¹ pour le liquide ionique volumique, et de 1,3 (+/- 0,2) 10⁻⁷ cm²s⁻¹ pour le même liquide ionique confiné dans la membrane.

Ensuite, on effectue des mesures complémentaires par PFG-NMR de l'hydrogène, du Fluor 19 ou du Lithium 7, des coefficients d'autodiffusion (D_{S}) de différents électrolytes confinés dans la membrane de nanotubes de carbone NTCs préparée dans l'exemple 1.

Ces électrolytes sont les suivants :
- un électrolyte constitué par du OMIMBF₄; ou
- un électrolyte constitué par du BMIMTFSI 1-butyl-3-methylimidazolium bis(trifluorométhylsulfonyl imide); ou
- un électrolyte constitué par du POE-LiTFSI (M_{PEO} = 500 g/mol, 29% en masse de LiTFSI).

Les mesures effectuées sont les suivantes
- OMIMBF₄ : mesures ¹H-PFG-NMR (dynamique du cation) et ¹⁹F (dynamique de l'anion) à température ambiante (25°C) et à 55 °C ;
- BMIMTFSI : mesures ¹H-PFG-NMR (dynamique du cation) et ¹⁹F (dynamique de l'anion) à température ambiante ;
- POE-LiTFSI (M_{PEO} = 500 g/mol, 29% en masse de LiTFSI) : mesures ¹H-PFG-NMR (dynamique du POE) ¹⁹F (dynamique de l'anion), ⁷Li (dynamique du Li) à température ambiante.

A des fins de comparaison, on mesure également, à la température ambiante, les coefficients d'autodiffusion (D_{S}) de ces mêmes électrolytes mais non confinés dans les pores de la membrane de NTCs.

Ces électrolytes non-confinés sont aussi appelés électrolytes « volumiques» ou « en volume » (« *bulk* »).

Les résultats des mesures complémentaires effectuées sont regroupés dans le Tableau 1 ci-dessous.

**Tableau 1 :**

| Coefficients d'autodiffusion (D_{S}) des électrolytes OMIMBF₄, BMIMTFSI et PEO-LiTFSI mesurés par PFG-NMR (¹H, ¹⁹F, et ⁷Li) confinés dans la membrane de NTC (« *@NTC* ») et non confinés dans la membrane (« *Bulk* »). | | | | |
|---|---|---|---|---|
| Le rapport ou ratio D_{S-confiné} / D_{S-bulk} est aussi indiqué. | | | | |
| **Echantillon** | **¹H - 25°C** | **¹⁹F - 25°C** | **¹H - 55°C** | **¹Li - 25°C** |
| | **(10⁸cm²/s)** | **(10⁸cm²/s)** | **(10⁸cm²/s)** | **(10⁸cm²/s)** |
| **OMIMBF₄** | 3,7 ± 0,2 | 4,7 ± 0,3 | 14,5 ± 1,0 | - |
| **OMIMBF₄ @ NTC** | 8,2 ± 0,8 | 11,5 ± 1,4 | 24 ± 3 | - |
| **Ratio** | 2,2 ± 0,3 | 2,6 ± 0,4 | 1,7 ± 0,3 | - |
| **BMIMTFSI** | 27 ± 2 | 21,5 ± 2 | - | - |
| **BMIMTFSI @ NTC** | 31,0 ± 3 | 22 ± 2 | - | - |
| **Ratio** | 1,1 ± 0,2 | 1,0 ± 0,1 | - | - |
| **PEO-LiTFSI @ NTC** | 8,6 ± 0,6 | 10,1 ± 1 | - | 6,9 ± 1,1 |
| **PEO-LiTFSI bulk** | 6 ± 0,4 | 10 ± 0,5 | - | 5,2 ± 0,4 |
| **Ratio** | 1,4 ± 0,2 | 1 ± 0,3 | - | 1,3 ± 0,2 |

Confiné dans les NTCs, la mobilité de BMIMTFSI n'est pas altérée par rapport à l'électrolyte non confiné (tableau 1 : ratio ≈ 1).

Toutefois, ce résultat montre qu'il n'y a pas (ou peu) d'interactions avec la surface interne des NTCs.

A 55°C, la mobilité de OMIMBF₄ augmente sous confinement d'un facteur ^{~} 1.7.

Lorsque la température diminue, cet effet est encore augmenté. On observe en effet une augmentation de la mobilité (du cation et de l'anion) d'un facteur 2-3.

Une interprétation possible est la modification de l'auto-organisation à l'échelle nanométrique de OMIMBF₄. Sous confinement, cette nano-organisation diminue et facilite la mobilité à l'échelle micrométrique (échelle de mesure de la PFG-NMR).

Les résultats obtenus pour le OMIMBF₄ à 55°C et le BMIMTFSI concordent avec cette explication : dans les deux cas, la nanostructuration du liquide ionique LI est moins prononcée et le ratio D_{S-confiné}/ D_{S-bulk} est par conséquent moins important.

Les résultats obtenus avec le PEO-LiTFSI montrent que le principe de la mesure fonctionne également pour ce type d'électrolyte, bien que le gain en mobilité soit faible.

Toutefois en diminuant le diamètre des NTC, on s'attend à un gain nettement supérieur.

### Exemple 3.

Dans cet exemple, on mesure la conductivité du liquide ionique confiné dans la membrane de nanotubes de carbone NTCs préparée dans l'exemple 1 à la température ambiante.

La mesure est faite par spectroscopie d'impédance (Fig. 8).

A des fins de comparaison, on mesure également, à la température ambiante, la conductivité du même liquide ionique que celui confiné dans les pores de la membrane de NTCs de l'exemple 1, à savoir le 1-octyl-3-methylimidazolium tétrafluoroborate, (OMIMBF₄), mais non confiné dans les pores. Ce liquide ionique non-confiné est aussi appelé liquide ionique « volumique » ou « en volume » (« *bulk* »).

Le schéma de principe du dispositif qui a permis de mesurer par spectroscopie d'impédance, à température ambiante, la conductivité du liquide ionique OMIMBF₄ en volume, non confiné, et dans une membrane de nanotubes de carbone est montré sur la Figure 8.

Ce dispositif comprend une électrode supérieure (71), et une électrode inférieure (72) séparées par une distance L. Entre ces deux électrodes (71, 72) est placée la membrane selon l'invention, préparée dans l'exemple 1 (73), qui comprend des nanotubes de carbone (74) (par commodité un seul nanotube de carbone a été représenté) à l'intérieur desquels se trouve confiné le liquide ionique OMIMBF4 (75) dans une matrice de polystyrène (76).

Pour assurer un contact électrique parfait entre la membrane (73) confinant le liquide ionique (75) (le liquide ionique confiné est aussi noté « IL@NTC » et son impédance est Z_{IL@NTC}) et les électrodes (71, 72), un excès de liquide ionique en volume aussi appelé liquide bulk (noté « *bulk* ») d'une épaisseur connue, à savoir de l'ordre quelques millimètres est maintenu de chaque côté de la membrane.

Ainsi entre la surface inférieure de l'électrode (71) et la membrane se trouve du liquide ionique en volume (77) d'une épaisseur connue E1 (79), et entre la membrane (73) et la surface inférieure de l'électrode (72) se trouve de liquide ionique en volume (78) d'une même épaisseur connue E2 égale à E1 (710). L'impédance totale du liquide ionique en volume d'une épaisseur totale E1 + E2 est donc Z_{bulk}.

La surface active (711) du liquide ionique (77) ou (78) peut être désignée par S.

L'impédance du liquide ionique en volume (77) d'une épaisseur connue E1 (79), et l'impédance du liquide ionique en volume d'une épaisseur connue E2 (710) est donc de Z_{bulk}/2.

L'impédance Zₜₒₜ totale du système constitué par le liquide ionique en volume, et le liquide ionique confiné est donc la suivante : Zₜₒₜ=Z_{bulk}+Z_{IL@NTC}.

Les résultats des mesures réalisées dans cet exemple sont portés sur la Figure 10 qui donne la Représentation Cole-Cole de l'impédance électrique de l'électrolyte en volume (« *bulk* ») et de l'électrolyte confiné dans les nanotubes, d'une membrane comprenant des nanotubes de carbone dans une matrice de polystyrène.

Pour donner une estimation de l'incertitude de la mesure, dans chaque cas, deux mesures successives sont représentées.

L'impédance électrique de l'électrolyte en volume (Z_{bulk}) et l'impédance totale du système (Zₜₒₜ). sont indiquées sur la Figure 10.

La résistance du liquide ionique confiné dans les nanotubes NTCs de la membrane est Z_{IL@NTC-PS} =Zₜₒₜ - Z_{bulk} ^{~} 1500-1000 = 500 Ω. R_{NTC}=1,5 nm, ρ_{NTC}=3,0×10¹¹ NTC/cm², e_{NTC}=125 µm, et S=0,5 cm², sont respectivement le rayon interne, la densité surfacique, la longueur des NTCs (ou de façon équivalente l'épaisseur de la membrane), et la surface utile de contact entre les électrodes et la membrane comprenant des nanotubes de carbone dans une matrice de polystyrène.

La conductivité de l'éléctrolyte confiné dans la membrane comprenant des nanotubes de carbone dans une matrice de polystyrène est *σ_{IL@NTC-PS}* = *e_{NTC}*/ *(Z_{IL@NTC-PS}* × *π R_{NTC}² × ρ_{NTC})*/*S* = *0,236 S*/*m.*

La conductivité de l'électrolyte volumique dans les mêmes conditions est σ_{IL bulk} = 0,07 S/m.

Sous confinement, le gain en conductivité est donc de 3,4±1.

Les exemples 3 et 4 montrent que le confinement de l'électrolyte permet d'obtenir un coefficient d'autodiffusion (« *self-diffusion coefficient* ») et par voie de conséquence une conductivité ionique de l'électrolyte supérieure (on montre ici un facteur 3,4) à ceux de l'électrolyte en volume.

## Revendications

1. Membrane poreuse à électrolyte pour des dispositifs électrochimiques, comprenant une première surface principale (21) et une deuxième surface principale (22) séparées par une épaisseur (23) dans laquelle :
- des nanotubes de carbone, définissant des pores ou canaux traversant (24) ouverts à leurs deux extrémités (25, 26), d'un diamètre inférieur ou égal à 100 nm, orientés dans le sens de l'épaisseur (23) de la membrane et tous substantiellement parallèles, sur la totalité de l'épaisseur (23) de la membrane, relient la première surface principale (21) et la deuxième surface principale (22) ;
- les nanotubes de carbone sont séparés par un espace, et ledit espace entre les nanotubes de carbone est totalement rempli par au moins un matériau solide ;
- un électrolyte est confiné à l'intérieur des nanotubes de carbone ; et
- la composition chimique de l'électrolyte confiné est la même dans tout l'intérieur des nanotubes ;
- de préférence la première et la deuxième surfaces principales sont planes et parallèles, la membrane est une membrane planaire, et les nanotubes, les pores ou canaux, sont substantiellement alignés, ou alignés, perpendiculairement à ladite surface.

2. Membrane selon la revendication 1, dans laquelle les nanotubes de carbone sont fonctionnalisés sur leur paroi extérieure afin de les rendre isolant électroniques, par exemple par fluoration, ou au moyen d'un composé organique qui les rend isolants électroniques, comme un aryl diazonium ; ou bien les nanotubes de carbone sont fonctionnalisés, sur leur paroi extérieure par des espèces redox, comme des anthraquinones, et/ou des espèces électroactives comme le ferrocènepyrène.

3. Membrane selon l'une quelconque des revendications précédentes, dans laquelle les nanotubes ont un diamètre interne de 1 à 100 nm, de préférence de 1 à 20 nm, de préférence encore de 1 à 3 nm.

4. Membrane selon l'une quelconque des revendications précédentes, dans laquelle les nanotubes de carbone et les pores ou canaux ont une longueur, de 10 microns à 100 mm, de préférence de 50 microns à 500 microns, par exemple de 150 microns.

5. Membrane selon l'une quelconque des revendications précédentes, dans laquelle le matériau solide est choisi parmi les matériaux isolants électroniques ou parmi les matériaux conducteurs électroniques dont la surface extérieure, en contact avec l'extérieur de la membrane, a été rendue électroniquement isolante.

6. Membrane selon l'une quelconque des revendications 1 à 5, dans laquelle le matériau solide est choisi parmi les polymères organiques, les métaux et les oxydes de métaux.

7. Membrane selon l'une quelconque des revendications précédentes, dans laquelle l'électrolyte est choisi parmi un transporteur de protons ou conducteur protonique tel qu'un liquide ionique protonique ou un polymère conducteur protonique, un liquide ionique zwittérionique, un acide dissous dans un polymère organique, un liquide ionique, un liquide ionique contenant un sel conducteur ionique tel qu'un sel d'un métal alcalin ou un sel d'un métal alcalino-terreux, un solvant organique liquide ou un polymère organique contenant un sel conducteur ionique tel qu'un sel de métal alcalin ou alcalinoterreux, un liquide ionique dans un polymère organique, un mélange d'un polymère organique et d'un solvant organique, un mélange d'un liquide ionique et d'un solvant organique, un mélange d'un liquide ionique, d'un solvant organique et d'un sel d'un métal alcalin ou alcalino-terreux, un mélange d'un polymère organique, d'un solvant organique et d'un sel d'un métal alcalin ou alcalino-terreux, un mélange d'un sel d'un métal alcalin ou alcalino-terreux par exemple de lithium dans un liquide ionique protique; ou encore une combinaison de plusieurs des électrolytes précédents; de préférence le polymère organique est un polymère qui permet une bonne solvatation des ions de métaux alcalins tels que Li ou des ions de métaux alcalino-terreux, par exemple le polymère organique est choisi parmi les homopolymères et copolymères d'oxyde d'éthylène, et leurs dérivés; de préférence, le sel conducteur ionique est un sel d'un métal alcalin, par exemple un sel de lithium ou un sel de sodium ; ou un sel d'un métal alcalinoterreux, par exemple un sel de magnésium ; de préférence encore, le sel conducteur ionique est un sel de lithium, choisi parmi LiAsF₆, LiClO₄, LiBF₄, LiPF₆, LiBOB, LiODBF, LiB(C₆H₅), LiR_{F}SO₃ par exemple LiCF₃SO₃, LiCH₃SO₃, LiN(R_{F}SO₂)₂ par exemple LiN(CF₃SO₂)₂ (LiTFSI) ou LiN(C₂F₅SO₂)₂ (LiBETI), LiC(R_{F}SO₂)₃, par exemple LiC(CF₃SO₂)₃ (LiTFSM), dans lesquels R_{F} est choisi parmi un atome de fluor et un groupement perfluoroalkyle comprenant 1 à 9 atomes de carbone, de préférence de 1 à 8 atomes de carbone, LiTFSI est l'acronyme de lithium bis(trifluorométhylsulfonyl)imide, LiBOB celui de lithium bis(oxalato)borate, et LiBETI celui de lithium bis(perfluoroéthylsulfonyl)imide, ou un sel de sodium analogue aux sels de lithium précédemment énumérés mais comprenant un ion sodium au lieu d'un ion lithium.

8. Membrane selon la revendication 7, dans laquelle le polymère organique a une masse molaire inférieure à 10⁶ g/mol, de préférence inférieure à 10⁵ g/mol, de préférence encore inférieure à sa masse d'enchevêtrement critique.

9. Membrane selon la revendication 7, dans laquelle la concentration en sel conducteur ionique, dans l'électrolyte est de 1 à 50% en masse par rapport à la masse de l'électrolyte.

10. Membrane selon l'une quelconque des revendications 1 à 9, dans laquelle l'électrolyte remplit totalement les nanotubes de carbone.

11. Procédé de préparation de la membrane poreuse à électrolyte selon l'une quelconque des revendications 1 à 10, dans lequel on réalise les étapes successives a) et b) suivantes :
a) on fait croître des nanotubes de carbone, tous substantiellement parallèles, et séparés par un espace, sur une surface d'un substrat pourvue d'un catalyseur de croissance des nanotubes de carbone ;
b) ledit espace entre les nanotubes de carbone est totalement rempli par un matériau solide;
ou bien on réalise l'étape a1) suivante :
a1) on fait croître des nanotubes de carbone, tous substantiellement parallèles, et séparés, sur une surface d'un substrat et à l'intérieur des pores d'un matériau solide poreux aux pores orientés ;
puis, à l'issue de l'étape b) ou de l'étape a1), on réalise l'étape c) suivante :
c) on élimine le substrat, tout matériau solide éventuel en excès, et on ouvre les deux extrémités des nanotubes de carbone. ;
puis, à l'issue de l'étape c), on réalise l'étape d) suivante :
d) on remplit l'intérieur des nanotubes avec un électrolyte.

12. Procédé selon la revendication 11, dans lequel le substrat de croissance est une plaquette de silicium, ou un feuillard d'acier inoxydable ou d'aluminium sur laquelle (lequel) est déposée une couche d'alumine, et le catalyseur de croissance des nanotubes de carbone est déposé sur la couche d'alumine.

13. Procédé selon l'une quelconque des revendications 11 et 12, dans lequel le catalyseur de croissance des nanotubes de carbone est choisi parmi le fer, le nickel, le cobalt, et leurs alliages.

14. Procédé selon l'une quelconque des revendications 11 à 13, dans lequel on fait croître les nanotubes de carbone par un procédé de dépôt chimique en phase vapeur CVD.

15. Procédé selon l'une quelconque des revendications 11 à 14, dans lequel le matériau solide est un polymère organique et l'étape b) est réalisée :
- soit en dissolvant le polymère organique dans un solvant pour former une solution du polymère organique, en remplissant totalement l'espace entre les nanotubes de carbone avec la solution du polymère organique et en évaporant le solvant ;
- soit en chauffant le polymère organique en l'absence de solvant au-dessus de sa température de transition vitreuse (Tg) ou de son point de fusion pour le rendre fluide, et en laissant le polymère fluide s'absorber dans l'espace entre les nanotubes de carbone ;
- soit en remplissant l'espace entre les nanotubes de carbone par un mélange comprenant des monomères organiques (tels que le styrène, le méthacrylate de méthyle, ou autre), ou des oligomères organiques modifiés par des fonctions réactives, ou des copolymères organiques, et en outre, un ou plusieurs amorceur(s) de radicaux libres photosensible et/ou thermo sensible(s) ;
puis en réticulant ledit mélange thermiquement ou au moyen d'un rayonnement photonique.

16. Procédé selon l'une quelconque des revendications 11 à 15, dans lequel le matériau solide est un métal, et alors l'étape b) est réalisée en déposant ledit métal par un procédé de dépôt électrochimique dans l'espace entre les nanotubes de carbone, ou bien, le matériau solide est un oxyde de métal et alors l'étape b) est réalisée en déposant ledit oxyde de métal par un procédé de dépôt électrochimique, ou par un procédé sol-gel, dans l'espace entre les nanotubes de carbone.

17. Procédé selon l'une quelconque des revendications 11 à 16, dans lequel l'étape b) est réalisée en projetant ledit matériau solide dans l'espace entre les nanotubes de carbone.

18. Procédé selon l'une quelconque des revendications 11 à 17, dans lequel l'étape c) est réalisée par polissage mécanique et/ou par attaque plasma.

19. Dispositif électrochimique comprenant une membrane à électrolyte selon l'une quelconque des revendications 1 à 10.

20. Accumulateur au lithium, tel qu'un accumulateur lithium-métal ou un accumulateur lithium-ion, comprenant une membrane à électrolyte selon l'une quelconque des revendications 1 à 10, une électrode positive, et une électrode négative.

## Patentansprüche

1. Poröse Elektrolytmembran für elektrochemische Vorrichtungen, enthaltend eine erste Hauptfläche (21) und eine zweite Hauptfläche (22), die durch eine Dicke (23) getrennt sind, wobei:
- Kohlenstoffnanoröhrchen, die an ihren beiden Enden (25, 26) offene, durchgehende Poren oder Kanäle (24) definieren, einen Durchmesser kleiner oder gleich 100 nm haben, in Richtung der Dicke (23) der Membran ausgerichtet sind und alle im Wesentlichen parallel über die gesamte Dicke (23) der Membran verlaufen, die erste Hauptfläche (21) und die zweite Hauptfläche (22) verbinden;
- die Kohlenstoffnanoröhrchen durch einen Zwischenraum getrennt sind und der Zwischenraum zwischen den Kohlenstoffnanoröhrchen vollständig mit mindestens einem festen Material gefüllt ist;
- ein Elektrolyt im Inneren der Kohlenstoffnanoröhrchen eingeschlossen ist; und
- die chemische Zusammensetzung des eingeschlossenen Elektrolyten im gesamten Innenraum der Nanoröhrchen dieselbe ist;
- wobei vorzugsweise die erste und die zweite Hauptfläche eben sind und parallel verlaufen, wobei die Membran eine planare Membran ist, und die Nanoröhrchen, die Poren oder Kanäle senkrecht zur genannten Fläche ausgerichtet oder im Wesentlichen senkrecht dazu ausgerichtet sind.

2. Membran nach Anspruch 1, wobei die Kohlenstoffnanoröhrchen an ihrer Außenwand funktionalisiert sind, um sie elektronisch isolierend zu machen, beispielsweise durch Fluorierung oder mittels einer organischen Verbindung, die sie elektronisch isolierend macht, wie ein Aryldiazonium; oder die Kohlenstoffnanoröhrchen an ihrer Außenwand durch Redox-Spezies, wie Anthrachinone, und/oder elektroaktive Spezies, wie Ferrocenpyren, funktionalisiert sind.

3. Membran nach einem der vorhergehenden Ansprüche, wobei die Nanoröhrchen einen Innendurchmesser von 1 bis 100 nm, vorzugsweise von 1 bis 20 nm, besonders bevorzugt von 1 bis 3 nm, haben.

4. Membran nach einem der vorhergehenden Ansprüche, wobei die Kohlenstoffnanoröhrchen und die Poren oder Kanäle eine Länge von 10 Mikrometer bis 100 mm, vorzugsweise von 50 Mikrometer bis 500 Mikrometer, beispielsweise von 150 Mikrometer, haben.

5. Membran nach einem der vorhergehenden Ansprüche, wobei das feste Material ausgewählt ist aus elektronisch isolierenden Materialien oder aus elektronisch leitenden Materialien, deren mit der Außenseite der Membran in Kontakt stehende Außenfläche elektronisch isolierend gemacht wurde.

6. Membran nach einem der Ansprüche 1 bis 5, wobei das feste Material ausgewählt ist aus organischen Polymeren, Metallen und Metalloxiden.

7. Membran nach einem der vorhergehenden Ansprüche, wobei der Elektrolyt ausgewählt ist aus einem Protonenträger oder Protonenleiter, wie einer protonenhaltigen ionischen Flüssigkeit oder einem protonenleitenden Polymer, einer zwitterionischen ionischen Flüssigkeit, einer in einem organischen Polymer gelösten Säure, einer ionischen Flüssigkeit, einer ionischen Flüssigkeit, die ein ionenleitendes Salz, wie etwa ein Alkalimetallsalz oder ein Erdalkalimetallsalz, enthält, einem flüssigen organischen Lösungsmittel oder einem organischen Polymer, das ein ionenleitendes Salz, wie etwa ein Alkali-oder Erdalkalimetallsalz, enthält, einer ionischen Flüssigkeit in einem organischen Polymer, einem Gemisch aus einem organischen Polymer und einem organischen Lösungsmittel, einem Gemisch aus einer ionischen Flüssigkeit und einem organischen Lösungsmittel, einem Gemisch aus einer ionischen Flüssigkeit, einem organischen Lösungsmittel und einem Salz eines Alkali- oder Erdalkalimetalls, einem Gemisch aus einem organischen Polymer, einem organischen Lösungsmittel und einem Salz eines Alkali- oder Erdalkalimetalls, einem Gemisch aus einem Salz eines Alkali- oder Erdalkalimetalls, beispielsweise Lithium, in einer protischen ionischen Flüssigkeit; oder einer Kombination aus mehreren der oben genannten Elektrolyte; wobei vorzugsweise das organische Polymer ein Polymer ist, das eine gute Solvatisierung von Alkalimetallionen, wie etwa Li, oder Erdalkalimetallionen ermöglicht, wobei das organische Polymer beispielsweise aus Ethylenoxid-Homopolymeren und -Copolymeren und Derivaten davon ausgewählt ist; wobei bevorzugt das ionenleitende Salz ein Alkalimetallsalz, beispielsweise ein Lithiumsalz oder Natriumsalz; oder ein Erdalkalimetallsalz, beispielsweise ein Magnesiumsalz, ist; wobei weiter bevorzugt das ionenleitende Salz ein Lithiumsalz ist, ausgewählt aus LiAsF₆, LiClO₄, LiBF₄, LiPF₆, LiBOB, LiODBF, LiB(C₆H₅), LiR_{F}SO₃, beispielsweise LiCF₃SO₃, LiCH₃SO₃, LiN(R_{F}SO₂)₂, beispielsweise LiN(CF₃SO₂)₂ (LiTFSI) oder LiN(C₂F₅SO₂)₂ (LiBETI), LiC(R_{F}SO₂)₃, beispielsweise LiC(CF₃SO₂)₃ (LiTFSM), worin R_{F} ausgewählt ist aus einem Fluoratom und einer Perfluoralkylgruppe mit 1 bis 9 Kohlenstoffatomen, vorzugsweise 1 bis 8 Kohlenstoffatomen, LiTFSI für Lithium-bis(trifluormethylsulfonyl)imid steht, LiBOB für Lithium-bis(oxalato)borat und LiBETI für Lithium-bis(perfluorethylsulfonyl)imid steht, oder ein Natriumsalz, das den oben genannten Lithiumsalzen entspricht, jedoch ein Natriumion anstelle eines Lithiumions enthält.

8. Membran nach Anspruch 7, wobei das organische Polymer eine Molmasse von weniger als 10⁶ g/mol, vorzugsweise weniger als 10⁵ g/mol und noch bevorzugter weniger als seine kritische Verschlaufungsmasse aufweist.

9. Membran nach Anspruch 7, wobei die Konzentration des ionenleitenden Salzes im Elektrolyten 1 bis 50 Masse-%, bezogen auf die Masse des Elektrolyten, beträgt.

10. Membran nach einem der Ansprüche 1 bis 9, wobei der Elektrolyt die Kohlenstoffnanoröhrchen vollständig ausfüllt.

11. Verfahren zur Herstellung der porösen Elektrolytmembran nach einem der Ansprüche 1 bis 10, wobei die nachstehenden aufeinanderfolgenden Schritte a) und b) ausgeführt werden:
a) Wachstum von Kohlenstoffnanoröhrchen, die alle im Wesentlichen parallel verlaufen und durch einen Zwischenraum getrennt sind, auf einer Fläche eines Substrats, die mit einem Katalysator für das Wachstum von Kohlenstoffnanoröhrchen versehen ist;
b) Füllen des Zwischenraums zwischen den Kohlenstoffnanoröhrchen vollständig mit einem festen Material;
oder wobei der nachstehende Schritt a1) ausgeführt wird:
a1) Wachstum von Kohlenstoffnanoröhrchen, die alle im Wesentlichen parallel verlaufen und getrennt sind, auf einer Fläche eines Substrats und im Inneren der Poren eines porösen festen Materials mit ausgerichteten Poren;
wobei anschließend an Schritt b) oder Schritt a1) der nachstehende Schritt c) ausgeführt wird:
c) Entfernen des Substrats und von gegebenenfalls überschüssigem, festen Material, und Öffnen der beiden Enden der Kohlenstoffnanoröhrchen;
wobei anschließend an Schritt c) der nachstehende Schritt d) ausgeführt wird: d) Füllen des Innenraums der Nanoröhrchen ist mit einem Elektrolyten.

12. Verfahren nach Anspruch 11, wobei das Wachstumssubstrat ein Silizium-Wafer oder eine Folie aus rostfreiem Stahl oder Aluminium ist, worauf eine Aluminiumoxidschicht abgeschieden wird und der Katalysator für das Wachstum von Kohlenstoffnanoröhrchen auf der Aluminiumoxidschicht abgeschieden wird.

13. Verfahren nach einem der Ansprüche 11 und 12, wobei der Katalysator für das Wachstum von Kohlenstoffnanoröhrchen ausgewählt ist aus Eisen, Nickel, Kobalt und deren Legierungen.

14. Verfahren nach einem der Ansprüche 11 bis 13, wobei die Kohlenstoffnanoröhrchen durch chemische Gasphasenabscheidung CVD gewachsen werden.

15. Verfahren nach einem der Ansprüche 11 bis 14, wobei das feste Material ein organisches Polymer ist und Schritt b) ausgeführt wird:
- entweder durch Lösen des organischen Polymers in einem Lösungsmittel, um eine Lösung des organischen Polymers zu bilden, vollständiges Ausfüllen des Zwischenraums zwischen den Kohlenstoffnanoröhrchen mit der Lösung des organischen Polymers und Verdampfen des Lösungsmittels;
- oder durch Erhitzen des organischen Polymers in Abwesenheit eines Lösungsmittels über seine Glasübergangstemperatur (Tg) oder seinen Schmelzpunkt, um es fließfähig zu machen, und Absorbieren des fließfähigen Polymers in den Zwischenraum zwischen den Kohlenstoffnanoröhrchen;
- oder durch Füllen des Zwischenraums zwischen den Kohlenstoffnanoröhrchen mit einem Gemisch, das organische Monomere (wie etwa Styrol, Methylmethacrylat oder dergleichen) oder mit reaktiven Funktionen modifizierte organische Oligomere oder organische Copolymere und ferner einen oder mehrere lichtempfindliche und/oder wärmeempfindliche Initiatoren für freie Radikale enthält;
dann durch Vernetzen des Gemischs thermisch oder mit Hilfe von Photonenstrahlung.

16. Verfahren nach einem der Ansprüche 11 bis 15, wobei das feste Material ein Metall ist und dann Schritt b) durch Abscheiden des Metalls durch einen elektrochemischen Abscheidungsprozess in dem Zwischenraum zwischen den Kohlenstoffnanoröhrchen ausgeführt wird, oder das feste Material ein Metalloxid ist und dann Schritt b) durch Abscheiden des Metalloxids durch einen elektrochemischen Abscheidungsprozess oder durch einen Sol-Gel-Prozess in dem Zwischenraum zwischen den Kohlenstoffnanoröhrchen ausgeführt wird.

17. Verfahren nach einem der Ansprüche 11 bis 16, wobei Schritt b) durch Spritzung des festen Materials in den Zwischenraum zwischen den Kohlenstoffnanoröhrchen ausgeführt wird.

18. Verfahren nach einem der Ansprüche 11 bis 17, wobei Schritt c) durch mechanisches Polieren und/oder Plasmaätzen ausgeführt wird.

19. Elektrochemische Vorrichtung enthaltend eine Elektrolytmembran nach einem der Ansprüche 1 bis 10.

20. Lithiumbatterie, wie etwa Lithium-Metall-Batterie oder eine Lithium-Ionen-Batterie, enthaltend eine Elektrolytmembran nach einem der Ansprüche 1 bis 10, eine positive Elektrode und eine negative Elektrode.

## Claims

1. A porous membrane with an electrolyte for electrochemical devices comprising a first main surface (21) and a second main surface (22) separated by a thickness (23) wherein:
- carbon nanotubes, defining through-pores or through-channels (24) open at both of their ends (25, 26), with a diameter of less than or equal to 100 nm, oriented in the direction of the thickness (23) of the membrane and all substantially parallel, on the totality of the thickness (23) of the membrane, connect the first main surface (21) and the second main surface (22);
- the carbon nanotubes are separated by a space, and said space between the carbon nanotubes is totally filled with at least one solid material; an electrolyte is confined inside the carbon nanotubes; and
- the chemical composition of the confined electrolyte is the same in all the inside of the nanotubes;
- preferably the first and the second main surfaces are planar and parallel, the membrane is a planar membrane and the nanotubes, the pores or channels, are substantially aligned, or aligned, perpendicularly to said surface.

2. The membrane according to claim 1, wherein the carbon nanotubes are functionalized on their outer wall in order to make them electronically insulating, for example by fluorination, or by means of an organic compound which makes them electronically insulating, like an aryldiazonium; or else the carbon nanotubes are functionalized, on their outer wall with redox species, such as anthraquinones, and/or electroactive species like ferrocenepyrene.

3. The membrane according to any one of the preceding claims, wherein the nanotubes have an internal diameter from 1 to 100 nm, preferably from 1 to 20 nm, still preferably from 1 to 3 nm.

4. The membrane according to any one of the preceding claims, wherein the carbon nanotubes and the pores or channels have a length, from 10 microns to 100 mm, preferably from 50 microns to 500 microns, for example 150 microns.

5. The membrane according to any one of the preceding claims, wherein the solid material is selected from among electronically insulating materials or from among electronically conducting materials for which the outer surface, in contact with the outside of the membrane, has been made electronically insulating.

6. The membrane according to any one of claims 1 to 5, wherein the solid material is selected from among organic polymers, metals and metal oxides.

7. The membrane according to any one of the preceding claims, wherein the electrolyte is selected from among a proton carrier or proton conductor such as a protonic ionic liquid or a protonic conducting polymer, a zwitterion ionic liquid, an acid dissolved in an organic polymer, an ionic liquid, an ionic liquid containing an ionic conducting salt such as a salt of an alkaline metal or a salt of an earth-alkaline metal, a liquid organic solvent or an organic polymer containing an ionic conducting salt such as a salt of an alkaline metal or earth-alkaline metal, an ionic liquid in an organic polymer, a mixture of an organic polymer and of an organic solvent, a mixture of an ionic liquid and of an organic solvent, a mixture of an ionic liquid, of an organic solvent and of a salt of an alkaline or earth-alkaline metal, a mixture of an organic polymer, of an organic solvent and of a salt of an alkaline or earth-alkaline metal, a mixture of a salt of an alkaline or earth-alkaline metal for example of lithium in a protonic ionic liquid; or further a combination of several of the preceding electrolytes; preferably the organic polymer is a polymer which allows good solvation of the ions of alkaline metals such as Li or of the ions of earth-alkaline metals, for example the organic polymer is selected from among the homopolymers and copolymers of ethylene oxide, and their derivatives; preferably, the ionic conducting salt is a salt of an alkaline metal, for example a lithium salt or a sodium salt; or a salt of an earth-alkaline metal, for example a magnesium salt; still preferably, the ionic conducting salt is a lithium salt, selected from among LiAsF₆, LiClO₄, LiBF₄, LiPF₆, LiBOB, LiODBF, LiB(C₆H₅), LiR_{F}SO₃ for example LiCF₃SO₃, LiCH₃SO₃, LiN(R_{F}SO₂)₂ for example LiN(CF₃SO₂)₂ (LiTFSI) or LiN(C₂F₅SO₂)₂ (LiBETI), LiC(R_{F}SO₂)₃, for example LiC(CF₃SO₂)₃ (LiTFSM), wherein R_{F} is selected from among a fluorine atom and a perfluoroalkyl group comprising from 1 to 9 carbon atoms, preferably from 1 to 8 carbon atoms, LiTFSI is the acronym of lithium bis(trifluoromethylsulfonyl)imide, LiBOB that of lithium bis(oxalato)borate, and LiBETI that of lithium bis(perfluoroethylsulfonyl)imide, or a sodium salt analogous to the lithium salts listed previously but comprising a sodium ion instead of a lithium ion.

8. The membrane according to claim 7, wherein the organic polymer has a molar mass of less than 10⁶ g/mol, preferably less than 10⁵ g/mol, still preferably less than its critical entanglement mass.

9. The membrane according to any claim 7, wherein the concentration of ionic conducting salt, in the electrolyte is from 1 to 50% by mass based on the mass of the electrolyte.

10. The membrane according to any of claims 1 to 9, wherein the electrolyte totally fills the carbon nanotubes.

11. A method for preparing the porous membrane with an electrolyte according to any one of claims 1 to 10, wherein the following successive steps a) and b) are carried out:
a) carbon nanotubes, all substantially parallel, and separated by a space, are grown on a surface of a substrate provided with a growth catalyst of carbon nanotubes;
b) said space between the carbon nanotubes is totally filled with a solid material; or else the following step a1) is carried out:
a1) carbon nanotubes, all substantially parallel, and separated, are grown on a surface of a substrate and inside the pores of a porous solid material with oriented pores; and then, at the end of step b) or of step a1), the following step c) is carried out:
c) the substrate, any possible solid material in excess, are removed, and both ends of the carbon nanotubes are opened;
then, at the end of step c), the following step d) is carried out:
d) the inside of the nanotubes is filled with an electrolyte.

12. The method according to claim 11, wherein the growth substrate is a silicon wafer, or a stainless steel or aluminium sheet on which is deposited an alumina layer, and the growth catalyst of the carbon nanotubes is deposited on the alumina layer.

13. The method according to any one of claims 11 and 12, wherein the growth catalyst of the carbon nanotubes is selected from among iron, nickel, cobalt, and alloys thereof.

14. The method according to any one of claims 11 to 13, wherein the carbon nanotubes are grown by a chemical vapor deposition method CVD.

15. The method according to any one of claims 11 to 14, wherein the solid material is an organic polymer and step b) is carried out:
- either by dissolving the organic polymer in a solvent in order to form a solution of the organic polymer, by totally filling the space between the carbon nanotubes with the solution of the organic polymer and by evaporating the solvent;
- or by heating the organic polymer in the absence of any solvent above its glass transition temperature (Tg) or above its melting point for making it fluid, and by leaving the fluid polymer be absorbed in the space between the carbon nanotubes;
- or by filling the space between the carbon nanotubes with a mixture comprising organic monomers (such as styrene, methyl methacrylate, or other monomer), or organic oligomers modified by reactive functions, or organic copolymers, and further one or several photosensitive and/or thermo-sensitive free radicals initiator(s);
and then by cross-linking the mixture thermally or by means of photon radiation.

16. The method according to any one of claims 11 to 15, wherein the solid material is a metal, and then step b) is carried out by depositing said metal by an electrochemical deposition method in the space between the carbon nanotubes, or else the solid material is a metal oxide and then step b) is carried out by depositing said metal oxide by an electrochemical deposition method, or by a sol-gel method, in the space between the carbon nanotubes.

17. The method according to any one of claims 11 to 16, wherein step b) is carried out by projecting said solid material in the space between the carbon nanotubes.

18. The method according to any one of claims 11 to 17, wherein the step c) is carried out by mechanical polishing and/or plasma etching.

19. An electrochemical device comprising a membrane with an electrolyte according to any one of claims 1 to 10.

20. A lithium accumulator, battery, such as a lithium-metal accumulator, battery or a lithium-ion accumulator, battery, comprising a membrane with an electrolyte according to any one of claims 1 to 10, a positive electrode, and a negative electrode.
